# EUROPEAN PATENT APPLICATION

(11) **EP 4 568 352 A1**
(43) Date of publication of application: **11.06.2025**
(21) Application number: 23850416.1
(22) Date of filing: 02.08.2023
(51) Int. Cl.: H04W 40/24, H04W 48/18, H04L 41/0894, H04W 76/12

(54) **URSP RULE UPDATE METHOD AND APPARATUS BASED ON NETWORK SLICE RE-MAPPING IN WIRELESS COMMUNICATION SYSTEM**

(30) Priority: 04.08.2022 US 202263394978 P
(71) Applicant: LG Electronics Inc., Yeongdeungpo-gu Seoul 07336 (KR)
(72) Inventor: CHOE, Hyunjung, Seoul 06772 (KR); YOUN, Myungjune, Seoul 06772 (KR)
(74) Representative: Mooser, Sebastian Thomas
(86) International application number: PCT/KR2023/011312
(87) International publication number: WO 2024/029916

(57) **Abstract**

The present disclosure relates to a method for operating a PCF in a wireless communication system, and the method may comprise configuring and providing a URSP rule for a PDU session, which is established based on a first network slice, to a terminal, based on a network slice associated with the PDU session being re-mapped from the first network slice to a second network slice based on an unavailability cause for the first network slice, obtaining slice re-mapping indication information and slice re-mapping-related information from an AMF, and updating the URSP rule based on the slice re-mapping-related information and providing the updated URSP rule to the terminal.

## Description

### Technical Field

The present disclosure relates to a wireless communication system, and particularly, to a method and apparatus for updating a UE route selection policy (URSP) rule based on network slice re-mapping.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### Disclosure

### Technical Problem

The present disclosure relates to a method and apparatus for performing network slice re-mapping of a wireless communication system.

The present disclosure relates to a method and apparatus for updating a URSP rule of a terminal based on network slice re-mapping in a wireless communication system.

The present disclosure relates to a method and apparatus for obtaining valid timer information for network slice re-mapping and updating a URSP rule based on the valid timer information in a wireless communication system.

The present disclosure relates to a method and apparatus for updating a URSP rule based on valid timer information and thus not performing a separate URSP rule update based on invalid slice re-mapping information.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

As an example of the present disclosure, a method for operating a policy control function (PCF) in a wireless communication system may comprise configuring and providing a UE route selection policy (URSP) rule for a protocol data unit (PDU) session, which is established based on a first network slice, to a terminal, based on a network slice associated with the PDU session being re-mapped from the first network slice to a second network slice based on an unavailability cause for the first network slice, obtaining slice re-mapping indication information and slice re-mapping-related information from an access management function (AMF), and updating the URSP rule based on the slice re-mapping-related information and providing the updated URSP rule to the terminal.

In addition, as an example of the present disclosure, a policy control function (PCF) operating in a wireless communication system may comprise at least one transceiver, at least one processor and at least one memory operably coupled with the least one processor and storing instructions that instruct, when executed, the at least one processor to perform a specific operation. The specific operation may comprise configuring and providing a UE route selection policy (URSP) rule for a protocol data unit (PDU) session, which is established based on a first network slice, to a terminal, based on a network slice associated with the PDU session being re-mapped from the first network slice to a second network slice based on an unavailability cause for the first network slice, obtaining slice re-mapping indication information and slice re-mapping-related information from an access management function (AMF), and updating the URSP rule based on the slice re-mapping-related information and providing the updated URSP rule to the terminal.

In addition, as an example of the present disclosure, a method for operating a terminal in a wireless communication system may comprise receiving a UE route selection policy (URSP) rule for a protocol data unit (PDU) session that is established based on a first network slice, based on a network slice associated with the PDU session being re-mapped from the first network slice to a second network slice based on an unavailability cause for the first network slice, configuring a PDU session based on the second network slice, and obtaining an updated URSP rule based on slice re-mapping-related information.

In addition, as an example of the present disclosure, a terminal operating in a wireless communication system may comprise at least one transceiver, at least one processor and at least one memory operably coupled with the least one processor and storing instructions that instruct, when executed, the at least one processor to perform a specific operation. The specific operation may comprise receiving a UE route selection policy (URSP) rule for a protocol data unit (PDU) session that is established based on a first network slice, based on a network slice associated with the PDU session being re-mapped from the first network slice to a second network slice based on an unavailability cause for the first network slice, configuring a PDU session based on the second network slice, and obtaining an updated URSP rule based on slice re-mapping-related information.

In addition, as an example of the present disclosure, a device comprising at least one memory and at least one processor functionally coupled with the at least one memory. The at least one processor may control the device to configure and provide a UE route selection policy (URSP) rule for a protocol data unit (PDU) session, which is established based on a first network slice, to another device, based on a network slice associated with the PDU session being re-mapped from the first network slice to a second network slice based on an unavailability cause for the first network slice, to obtain slice re-mapping indication information and slice re-mapping-related information from an access management function (AMF), and to update the URSP rule based on the slice re-mapping-related information and provide the updated URSP rule to the another device.

In addition, as an example of the present disclosure, a non-transitory computer-readable medium storing at least one instruction may comprise the at least one instruction that is executable by a processor. The at least one instruction may control a device to configure and provide a UE route selection policy (URSP) rule for a protocol data unit (PDU) session, which is established based on a first network slice, to another device, based on a network slice associated with the PDU session being re-mapped from the first network slice to a second network slice based on an unavailability cause for the first network slice, to obtain slice re-mapping indication information and slice re-mapping-related information from an access management function (AMF), and to update the URSP rule based on the slice re-mapping-related information and provide the updated URSP rule to the another device.

In addition, the following items may be commonly applied.

As an example of the present disclosure, the slice re-mapping indication information may be information indicating that the first network slice is not used and the second network slice is used.

In addition, as an example of the present disclosure, the PCF may obtain at least one of data network name (DNN) information of the PDU session, information on a location where congestion occurs, or information on a first network slice-related timer, from the AMF, together with the slice re-mapping indication information and the slice re-mapping-related information.

In addition, as an example of the present disclosure, based on the information on the location where congestion occurs and the information on the first network slice-related timer, which are obtained from the AMF, the PCF may configure a URSP rule condition, update the URSP rule based on information on the URSP rule condition and provide the updated URSP rule to the terminal.

In addition, as an example of the present disclosure, the terminal may obtain the information on the first network slice-related timer, establish a PDU session through the second network slice during operation of the first network slice-related timer, and establish a PDU session through the first network slice based on expiration of the first network slice-related timer.

In addition, as an example of the present disclosure, the terminal may apply the URSP rule from before the update, based on the expiration of the first network slice-related timer.

In addition, as an example of the present disclosure, the first network slice-related timer may indicate a time period in which the first network slice is not valid, or a time period in which the second network slice is valid.

In addition, as an example of the present disclosure, based on the slice re-mapping indication information and the slice re-mapping-related information being obtained from the AMF based on network congestion control, a UE policy association is generated based on no UE policy association being present, and the slice re-mapping indication information and the slice re-mapping-related information may be obtained based on the generated UE policy association.

In addition, as an example of the present disclosure, the AMF may obtain terminal capability information indicating whether or not the terminal supports network slice re-mapping, and the slice re-mapping indication information and the slice re-mapping-related information may be obtained from the AMF, based on re-mapping being performed from the first network slice to the second network slice.

In addition, as an example of the present disclosure, based on the AMF performing the network slice re-mapping, the AMF may transmit a session management (SM) context request or an SM context update to a session management function (SMF) and receive a response message based on the SM context request or the SM context update. Based on a network slice associated with a PDU session being replaced, the SMF may determine that the PDU session is associated with the second network slice. Based on a network slice associated with the PDU session being added, the SMF may determine that the PDU session is associated with the first network slice and the second network slice.

In addition, as an example of the present disclosure, the PCF may detect that the first network slice of the PDU session does not satisfy an application requirement of an application function (AF) and may re-map a network slice of the PDU session from the first network slice to the second network slice.

In addition, as an example of the present disclosure, the first network slice may be related to first single-network slice selection assistance information (S-NSSAI), and the second network slice may be related to second S-NSSAI.

### Advantageous Effects

The present disclosure may provide a method for performing network slice re-mapping of a wireless communication system.

The present disclosure may provide a method for updating a URSP rule of a terminal based on network slice re-mapping in a wireless communication system.

The present disclosure may provide a method for obtaining valid timer information for network slice re-mapping and updating a URSP rule based on the valid timer information in a wireless communication system.

The present disclosure may provide a method for updating a URSP rule based on valid timer information and thus not performing a separate URSP rule update based on invalid slice re-mapping information.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

### Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.
FIG. 1 is a view showing an example of a communication system applicable to the present disclosure.
FIG. 2 is a view showing an example of a UE to which the implementation of the present disclosure is applied.
FIG. 3 is a view showing an example of functional separation of a general NG-RAN and 5^{th} generation core (5GC).
FIG. 4 is a view showing an example of a general architecture of a 5^{th} generation (5G) system.
FIG. 5 is a view showing a case in which service continuity is not ensured due to slice resource shortage applicable to the present disclosure.
FIG. 6 is a view showing a method for performing slice re-mapping based on a handover request applicable to the present disclosure.
FIG. 7 is a view showing a method for performing handover by considering additional S-NSSAI applicable to the present disclosure.
FIG. 8 is a view showing a network slice re-mapping operation applicable to the present disclosure.
FIG. 9 is a view showing an operation of a terminal for supporting network slice applicable to the present disclosure.
FIG. 10 is a view showing an operation of a terminal for supporting network slice applicable to the present disclosure.
FIG. 11 is a view showing a method for conveying slice re-mapping capability information for network slice service continuity applicable to the present disclosure.
FIG. 12 is a view showing a method for changing S-NSSAI of a PDU session applicable to the present disclosure.
FIG. 13 is a view showing a method for supporting network slice service continuity based on session and service continuity (SSC) 3 applicable to the present disclosure.
FIG. 14 is a view showing a method for maintaining network slice service continuity based on a compatible network slice applicable to the present disclosure.
FIG. 15 is a view showing a method for performing PDU session handover to a target CN supporting alternative S-NSSAI applicable to the present disclosure.
FIG. 16 is a view showing a method by which a network controls terminal slice use applicable to the present disclosure.
FIG. 17 is a view showing a method by which a network controls terminal slice use applicable to the present disclosure.
FIG. 18 is a view showing a method for indicating modified slice information to a terminal through a PDU session modification command.
FIG. 19 is a view showing a method for configuring an AMF-based backoff timer.
FIG. 20 is a view showing a method for operating a PCF applicable to the present disclosure.
FIG. 21 is a view showing a method for operating a terminal applicable to the present disclosure.

### Mode for Invention

Following embodiments are achieved by combination of structural elements and features of the present disclosure in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present disclosure. The order of operations described in the embodiments of the present disclosure may be changed. Some structural elements or features of one embodiment may be included in another embodiment, or may be replaced with corresponding structural elements or features of another embodiment.

In the description of the drawings, procedures or steps which render the scope of the present disclosure unnecessarily ambiguous will be omitted and procedures or steps which can be understood by those skilled in the art will be omitted.

In the entire specification, when a certain portion "comprises" or "includes" a certain component, this indicates that the other components are not excluded, but may be further included unless specially described. The terms "unit", "-or/er" and "module" described in the specification indicate a unit for processing at least one function or operation, which may be implemented by hardware, software and a combination thereof. In addition, "a or an", "one", "the" and similar related words may be used as the sense of including both a singular representation and a plural representation unless it is indicated in the context describing the present specification (especially in the context of the following claims) to be different from this specification or is clearly contradicted by the context.

In this specification, the embodiments of the present disclosure are described with focus on the relationship of data reception and transmission between a base station and a mobile station. Herein, the base station means a terminal node of a network that performs direct communication with the mobile station. In this document, a specific operation, which is described to be performed by a base station, may be performed by an upper node of the base station in some cases.

That is, in a network consisting of a plurality of network nodes including a base station, various operations for communicating with a mobile station may be performed by the base station or network nodes other than the base station. Herein, "base station" may be replaced by such terms as "fixed station", "Node B", "eNode B(eNB)", "gNode B(gNB)", "ng-eNB", "advanced base station(ABS)", or "access point".

Also, in the embodiments of the present disclosure, "terminal" may be replaced by such terms as "user equipment(UE)", "mobile station(MS)", "subscriber station(SS)", "mobile subscriber station(MSS)", "mobile terminal" or "advanced mobile station(AMS)".

In addition, a transmission end refers to a fixed and/or mobile node that provides a data service or a voice service, and a reception end means a fixed and/or mobile node that receives a data service or a voice service. Accordingly, in the case of an uplink, a mobile station may be a transmission end, and a base station may be a reception end. Likewise, in the case of a downlink, a mobile station may be a reception end, and a base station may be a transmission end.

The embodiments of the present disclosure may be supported by standard documents disclosed in at least one of the following radio access systems: an IEEE 802 xx system, a 3rd generation partnership project (3GPP) system, a 3GPP long term evolution (LTE) system, a 3GPP 5th generation (5G) new radio (NR) system and a 3GPP2 system, and in particular, the embodiments of the present disclosure may be supported by the following documents: 3GPP TS (technical specification) 38.211, 3GPP TS 38.212, 3GPP TS 38.213, 3GPP TS 38.321, and 3GPP TS 38.331.

In addition, the embodiments of the present disclosure are applicable to another radio access system but is not limited to the above-described system. As an example, they are applicable to a system applied after a 3GPP 5G NR system and are not limited to a specific system.

That is, obvious steps and parts not described in the embodiments of the present disclosure may be described with reference to the above documents. In addition, all the terms disclosed in this document may be explained by the standard document.

Hereinafter, a preferred embodiment according to the present disclosure will be described in detail with reference to accompanying drawings. Detailed descriptions disclosed below together with accompanying drawings are intended to describe example embodiments of the present disclosure and not intended to show any sole embodiment in which a technical configuration of the present disclosure can be implemented.

In addition, specific terms used in the embodiments of the present disclosure are provided to help understand the present disclosure, and such specific terms may be used in any other modified forms without departing from the technical idea of the present disclosure.

The following technology may be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA) and the like.

For clarity of explanation, the descriptions below are based on a 3GPP communication system (e.g. LTE, NR and the like), but the technical idea of the present disclosure is not limited thereto. LTE may mean a technology after 3GPP TS 36.xxx Release 8. Specifically, the LTE technology after 3GPP TS 36.xxx Release 10 may be referred to as LTE-A, and the one after 3GPP TS 36.xxx Release 13 may be referred to as LTE-A pro. 3GPP NR may mean a technology after TS 38.xxx Release 15. 3GPP 6G may mean a technology after TS Release 17 and/or Release 18. "xxx' means the specific number of a standard document. LTE/NR/6G may be referred to collectively as 3GPP system.

Contents described in standard documents released earlier than the present disclosure may be referred to for the background art, terms and abbreviations used in the present disclosure. As an example, 36.xxx and 38.xxx standard documents may be referred to.

For terms, abbreviations, and other backgrounds that may be used in this document, reference may be made to the following standard document descriptions published prior to this document. In particular, terms, abbreviations, and other background technologies related to LTE/EPS (Evolved Packet System) may refer to 36.xxx series, 23.xxx series, and 24.xxx series, and NR (new radio)/5GS related terms and abbreviations and other backgrounds may refer to the 38.xxx series, 23.xxx series and 24.xxx series.

Hereinafter, the present disclosure is described based on the terms defined as above.

Three major requirement areas of 5G include (1) an enhanced mobile broadband (eMBB) area, (2) a massive machine type communication (mMTC) area, and (3) an ultra-reliable and low latency communications (URLLC) area.

Some use cases may require multiple areas for optimization, and other use case may be focused on only one key performance indicator (KPI). 5G supports these various use cases in a flexible and reliable method.

### Communication system applicable to the present disclosure

Although not limited thereto, various descriptions, functions, procedures, proposals, methods and/or operating flowcharts of the present disclosure disclosed herein may be applied to various fields requiring wireless communication/connection (e.g., 5G) between devices.

Hereinafter, more detailed illustrations will be presented with reference to drawings. In the drawings/description below, unless otherwise mentioned, the same drawing symbol may illustrate the same or corresponding hardware block, software block or functional block.

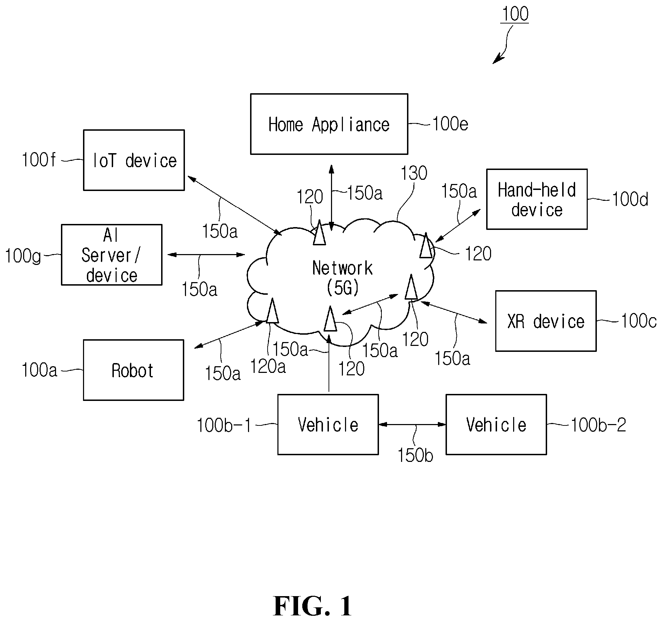

FIG. 1 is a view showing an example of a communication system applied to the present disclosure.

Referring to FIG. 1, a communication system 100 applied to the present disclosure includes a wireless device, a base station, and a network. Herein, the wireless device means a device performing communication using a wireless connection technology (e.g., 5G NR, LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, a vehicle may include a vehicle equipped with a wireless communication function, an autonomous driving vehicle, a vehicle capable of performing vehicle-to-vehicle communication, and the like. Herein, the vehicles 100b-1 and 100b-2 may include an unmanned aerial vehicle (UAV) (e.g., drone). The XR device 100c may include an augmented reality (AR)/virtual reality (VR)/mixed reality (MR) device and may be embodied in forms of a head-up display (HUD) installed in a vehicle, a television, a smartphone, a computer, a wearable device, a home appliance, digital signage, a vehicle, a robot, and the like. The hand-held device 100d may include a smartphone, a smart pad, a wearable device (e.g., a smart watch, smart glasses), a computer (e.g., a notebook and the like) and the like. The home appliance 100e may include a TV, a refrigerator, a washing machine, and the like. The IoT device 100f may include a sensor, a smart meter, and the like. For example, the base station 120 and the network 130 may be embodied as wireless devices, and a specific wireless device 120a may operate as a base station/network node to another wireless device.

The wireless devices 100a to 100f may be connected to the network 130 via the base station 120. AI technology may be applied to the wireless devices 100a to 100f, and the wireless devices 100a to 100f may be connected to the AI server 100g through the network 130. The network 130 may be constructed using a 3G network, a 4G(e.g., LTE) network or a 5G(e.g., NR) network. The wireless devices 100a to 100f may communicate with each other through the base station 120/the network 130 but perform direct communication (e.g., sidelink communication) not through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may communicate directly with another IoT device (e.g., a sensor) or another wireless device 100a to 100f.

Wireless communication/connection 150a, 150b and 150c may be made between the wireless devices 100a to 100f/the base station 120 and the base station 120/the base station 120. Herein, wireless communication/connection may be performed through various wireless connection technologies (e.g., 5G NR) such as uplink/downlink communication 150a, sidelink communication 150b (or D2D communication), and base station-to-base station communication 150c (e.g., relay, integrated access backhaul (IAB)). A wireless device and a base station/a wireless device and a base station and a base station may transmit/receive radio signals through the wireless communication/connections 150a, 150b and 150c. For example, the wireless communication/connections 150a, 150b and 150c may transmit/receive a signal through various physical channels. To this end, based on various proposals of the present disclosure, at least a part of various processes of setting configuration information for transmission/reception of a radio signal, various processes of processing a signal (e.g., channel encoding/decoding, modulation/demodulation, resource mapping/demapping, and the like), and a resource allocation process may be performed.

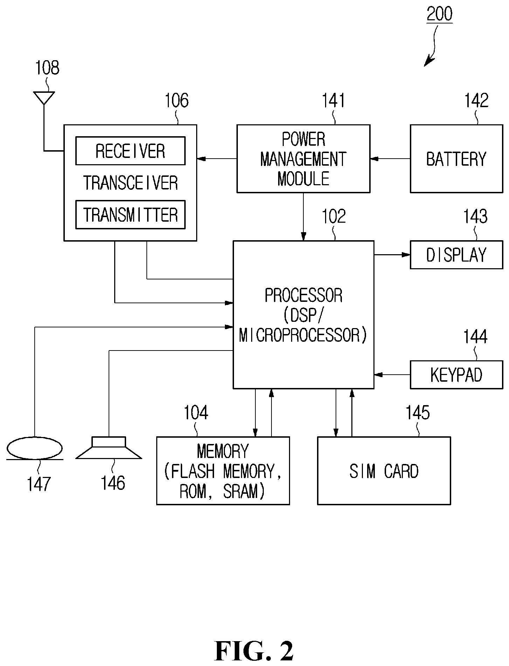

FIG. 2 is a view showing an example of a UE to which the implementation of the present disclosure is applied.

Referring to FIG. 2, a UE 200 may include a processor 202, a memory 204, a transceiver 206, one or more antennas 208, a power management module 241, a battery 242, a display 243, a keypad 244, a subscriber identification module (SIM) card 245, a speaker 246, and a microphone 247.

The processor 202 may be configured to implement a description, a function, a procedure, a proposal, a method and/or an operating flowchart disclosed in the present specification. The processor 202 may be configured to control one or more different components of the UE 200 to implement a description, a function, a procedure, a proposal, a method and/or an operating flowchart disclosed in the present specification. A layer of a wireless interface protocol may be embodied in the processor 202. The processor 202 may include an ASIC, other chipsets, a logic circuit and/or a data processing device. The processor 202 may be an application processor. The processor 202 may include at least one of a DSP, a central processing unit (CPU), a graphics processing unit (GPU), and a modem (modulator and demodulator).

The memory 204 may be coupled operably with the processor 202 and store various information for operating the processor 202. The memory 204 may include a ROM, a RAM, a flash memory, a memory card, a storage medium and/or another storage device. In case of implementation in software, a technology described herein may be implemented using a module (e.g., a procedure, a function, and the like) executing a description, a function, a procedure, a proposal, a method and/or an operating flowchart disclosed in the present specification. The module may be stored in the memory 204 and be executed by the processor 202. The memory 204 may be embodied in the processor 202 or outside the processor 202 in which case the memory 204 may be communicatively coupled with the processor 202 through various methods known in technology.

The transceiver 206 may be operably coupled with the processor 202 and transmit and/or receive a radio signal. The transceiver 206 may include a transmitter and a receiver. The transceiver 206 may include a baseband circuit for processing a radio frequency signal. The transceiver 206 may transmit and/or receive a radio signal by controlling the one or more antennas 208.

The power management module 241 may manage the power of the processor 202 and/or the transceiver 206. The battery 242 may supply power to the power management module 241.

The display 243 may output a result processed by the processor 202. The keypad 244 may receive an input to be used in the processor 202. The keypad 244 may be displayed on the display 243.

The SIM card 245 is an integrated circuit for safely storing an international mobile subscriber identity (IMSI) and a relevant key and may be used to identify and authenticate a subscriber in a hand-held telephone device like a mobile phone or a computer. In addition, contact information may be stored in many SIM cards.

The speaker 246 may output a sounded-related result processed in the processor 202. The microphone 247 may receive a sounded-related input to be used in the processor 202.

In an implement of the present specification, a UE may operate as a transmitting device in an uplink and a receiving device in a downlink. In an implement of the present specification, a base station may operate as a receiving device in a UL and a transmitting device in a DL. In the present specification, a base station may be referred to as a node B (Node B), an eNode B (eNB), and a gNB and may not be limited to a specific form.

In addition, as an example, a UE may be embodied in various forms according to a use example/service. A UE may be configured by various components, devices/parts and/or modules. For example, each UE may include a communication device, a control device, a memory device, and an addition component. A communication device may a communication circuit and a transceiver. For example, a communication circuit may include one or more processors and/or one or more memories. For example, a transceiver may include one or more transceivers and/or one or more antennas. A control device may be electrically coupled with a communication device, a memory device and an additional component and control an overall operation of each UE. For example, a control device may control an electric/mechanical operation of each UE based on a program/a code/an instruction/information stored in a memory device. A control device may transmit information stored in a memory device to the outside (e.g., another communication device) via a communication device through a wireless/wired interface or store information received from the outside (e.g., another communication device) through the wireless/wired interface in the memory device.

An additional component may be configured in various ways according to a type of a UE. For example, an additional component may include at least one of a power device/battery, an input/output (I/O) device (e.g., an audio I/O port, a video I/O port), a driving device, and a computing device. In addition, without being limited thereto, a UE may be embodied in forms of the robot 100a of FIG. 1, the vehicles 100b-1 and 100b-2 of FIG. 1, the XR device 100c of FIG. 1, the hand-held device 100d of FIG. 1, the home appliance 100e of FIG. 1, the IoT device 100f of FIG. 1, a digital broadcast terminal, a hologram device, a public safety device, an MTC device, a medical device, a fintech device (or financial device), a security device, a climate/environment device, the AI server/device 100g of FIG. 1, the base station 120 of FIG. 1, and a network node. A UE may be used a mobile or fixed place according to a use example/service.

Various components, devices/parts and/or all the modules of a UE may be connected to each other through a wired interface, or at least a part thereof may be wirelessly connected through a communication device. In addition, each component, a device/a part and/or a module of a UE may further include one or more components. For example, a control device may be configured by a set of one or more processors. As an example, a control device may be configured by a set of a communication control processor, an application processor (AP), an electronic control unit (ECU), a GPU, and a memory control processor. As anther example, a memory device may be configured by a RAM, a dynamic RAM (DRAM), a ROM, a flash memory, a volatile memory, a non-volatile memory, and/or a combination thereof.

### 5G System Architecture to which the Present Disclosure is Applicable

A 5G system is an advanced technology from 4G LTE mobile communication technology and supports a new radio access technology (RAT), extended long term evolution (eLTE) as an extended technology of LTE, non-3GPP access (e.g., wireless local area network (WLAN) access), etc. through the evolution of the existing mobile communication network structure or a clean-state structure.

The 5G system is defined based on a service, and an interaction between network functions (NFs) in an architecture for the 5G system can be represented in two ways as follows.

Reference point representation: indicates an interaction between NF services in NFs described by a point-to-point reference point (e.g., N11) between two NFs (e.g., AMF and SMF).

Service-based representation: network functions (e.g., AMF) within a control plane (CP) allow other authenticated network functions to access its services. The representation also includes a point-to-point reference point, if necessary.

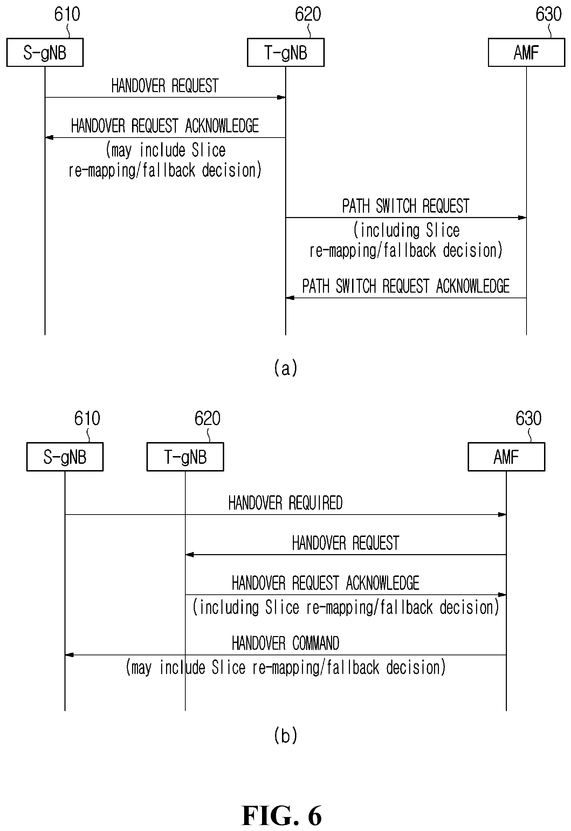

5GC (5G Core) may include various components, part of which are shown in FIG. 6, including an access and mobility management function (AMF), a session management function (SMF), a policy control function (PCF), a Prose user plane function (UPF), an application function (AF), unified data management (UDM), and a non-3GPP interworking function (N3IWF).

A UE is connected to a data network via the UPF through a next generation radio access network (NG-RAN) including the gNB. The UE may be provided with a data service even through untrusted non-3GPP access, e.g., a wireless local area network (WLAN). In order to connect the non-3GPP access to a core network, the N3IWF may be deployed.

The N3IWF performs a function of managing interworking between the non-3GPP access and the 5G system. When the UE is connected to non-3GPP access (e.g., WiFi referred to as IEEE 801.11), the UE may be connected to the 5G system through the N3IWF. The N3IWF performs control signaling with the AMF and is connected to the UPF through an N3 interface for data transmission.

The AMF may manage access and mobility in the 5G system. The AMF may perform a function of managing (non-access stratum) NAS security. The AMF may perform a function of handling mobility in an idle state.

The UPF performs a function of gateway for transmitting and receiving user data. The UPF node 440 may perform the entirety or a portion of a user plane function of a serving gateway (S-GW) and a packet data network gateway (P-GW) of 4G mobile communication.

The UPF is a component that operates as a boundary point between a next generation radio access network (NG-RAN) and the core network and maintains a data path between the gNB and the SMF. In addition, when the UE moves over an area served by the gNB, the UPF serves as a mobility anchor point. The UPF may perform a function of handling a PDU. For mobility within the NG-RAN (which is defined after 3GPP Release-15), the UPF may route packets. In addition, the UPF may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF may correspond to a termination point of a data interface toward the data network.

The PCF is a node that controls an operator's policy. The AF is a server for providing various services to the UE. The UDM is a server that manages subscriber information, such as home subscriber server (HSS) of 4G mobile communication. The UDM stores and manages the subscriber information in a unified data repository (UDR).

The SMF may perform a function of allocating an Internet protocol (IP) address of the UE. In addition, the SMF may control a packet data unit (PDU) session.

For convenience of explanation, hereinafter, reference numerals may be omitted for AMF, SMF, PCF, UPF, AF, UDM, N3IWF, gNB, or UE, which may operate with reference to contents described in standard documents released earlier than the present document.

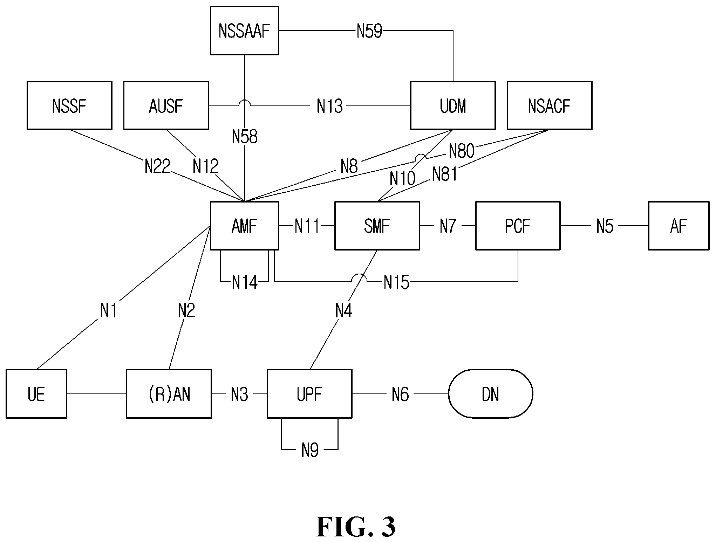

FIG. 3 is a view showing an example of expressing the structure of a wireless communication system applied to the present disclosure from a node perspective.

Referring to FIG. 3, a UE is connected to a data network (DN) through a next generation RAN. A control plane function (CPF) node performs all or a part of the functions of a mobility management entity (MME) of 4G mobile communication and all or a part of serving gateway (S-GW) and PDN gateway (P-GW) functions. The CPF node includes AMF and SMF.

A UPF node performs a function of a gateway in which data of a user is transmitted and received.

An authentication server function (AUSF) authenticates and manages a UE. A network slice selection function (NSSF) is a node for network slicing described below.

A network exposure function (NEF) provides a mechanism that safely opens the service and function of 5G core.

Reference points in FIG. 3 are described as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point betweenAMF and SMF. N12 represents a reference point betweenAMF and AUSF. N13 represents a reference point between UDM and AUSF. N14 represents a reference point between AMFs. N15 represents a reference point between PCF and AMF in a non-roaming scenario and a reference point between AMF and PCF of a visited network in a roaming scenario. N16 represents a reference point between SMFs. N22 represents a reference point betweenAMF and NSSF. N30 represents a reference point between PCF and NEF. N33 may represent a reference point between AF and NEF, and the above-described entity and interface may be configured with reference to contents described in standard documents released earlier than the present document.

A radio interface protocol is based on the 3GPP radio access network standard. The radio interface protocol is horizontally divided into a physical layer, a data link layer, and a network layer, and is vertically divided into a user plane for transmission of data information and a control plane for transfer of control signal (signaling).

The protocol layers may be divided into L1 (layer-1), L2 (layer-2), and L3 (layer-3) based on the three lower layers of the open system interconnection (OSI) reference model widely known in communication systems.

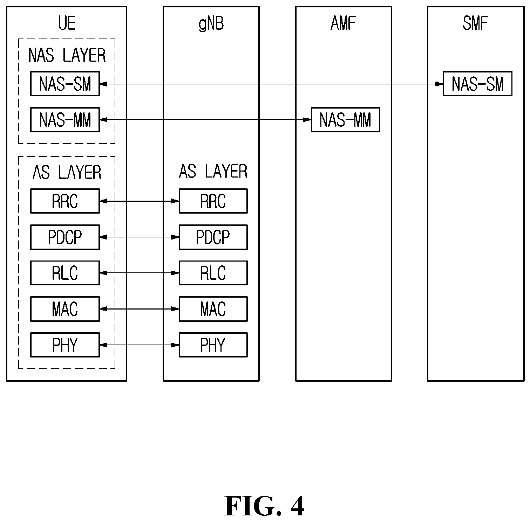

Hereinafter, the present disclosure describes each layer of a wireless protocol. FIG. 4 is a view showing an example of the structure of a radio interface protocol between a UE and a gNB.

Referring to FIG. 4, an access stratum (AS) layer may include a physical (PHY) layer, a medium access control layer, a radio link control (RLC) layer, a packet data convergence protocol (PDCP) layer, and a radio resource control (RRC) layer, and an operation based on each layer may be performed with reference to contents described standard documents released earlier than the present document.

As an example, when a terminal requests a network slice, if the network slice or an associated network slice instance is overloaded or not supported, a RAN node or a core network may re-map from the request network slice to another network slice.

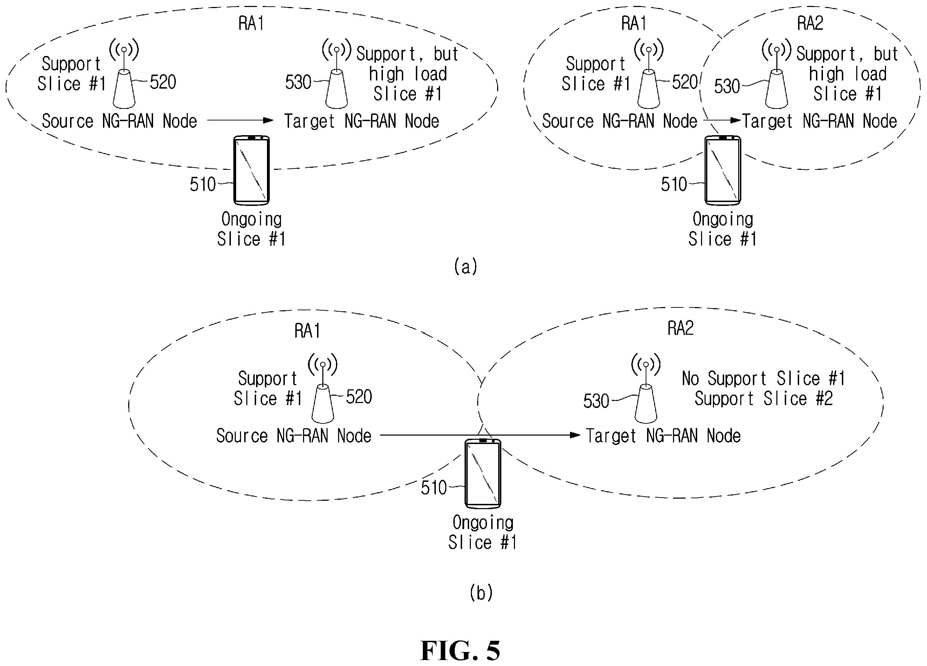

As a specific example, FIG. 5 is a view showing a case in which service continuity is not ensured due to slice resource shortage applicable to the present disclosure. Referring to (a) of FIG. 5, a slice used by a terminal 510 may be supported by both a source RAN node 520 and a target RAN node 530. It is possible to consider a case in which the terminal 510 performs a handover from the source RAN node 520 to the target RAN node 530. Herein, the slice used by the terminal 510 is supported in the target RAN node 530, but the slice may not be used in the RAN node 530 because of overload. Accordingly, the terminal 510 may not succeed in the handover based on the used slice to the target RAN node 530, and thus service continuity may not be ensured.

As another example, referring to (b) of FIG. 5, a slice used by the terminal 510 may be supported in the source RAN node 520 but may not be supported in the target RAN node 530. It is possible to consider a case in which the terminal 510 performs a handover from the source RAN node 520 to the target RAN node 530. Herein, because the slice used by the terminal 510 is not supported in the target RAN node 530, the terminal 510 may not receive a service based on the slice from the target RAN node 530. Accordingly, the terminal 510 may not succeed in the handover based on the used slice to the target RAN node 530, and thus service continuity may not be ensured.

As another example, as for a slice used by the terminal 510, when the source RAN node 520 has a shortage of slice resource or the source RAN node 520 does not support the slice, the terminal 510 may keep service continuity by performing a handover to the target RAN node 530 that has sufficient slice resources or supports the slice, but the present disclosure may not be limited thereto.

In the above-described situation, service continuity may not be maintained because of a shortage of slice resource or depending on whether or not a slice is supported, and a method therefor may be needed. Hereinafter, network slice re-mapping for service continuity will be described.

As an example, a target RAN node may determine slice re-mapping at a time when a terminal perform a handover. The target RAN node may check a re-mapping policy for a corresponding PDU session and perform slice re-mapping based on the policy. As an example, a slice re-mapping policy may be determined based on at least one of operations, administration and maintenance (OAM) and a core network (CN) but may not be limited thereto.

FIG. 6 is a view showing a method for performing slice re-mapping based on a handover request applicable to the present disclosure.

Referring to (a) of FIG. 6, a source-gNB (S-gNB) 610 may transmit a handover request to a target-gNB (T-gNB) 620. Herein, the T-gNB 620 may reject a slice currently used by a terminal based on a slice re-mapping policy and determine a slice re-mapping and fallback operation. Next, the T-gNB 620 may transmit a response message including slice re-mapping and fallback information to the S-gNB 610. In addition, the T-gNB 620 may transmit a path switch request including the slice re-mapping and fallback information to an AMF 630 and receive a response thereto.

As another example, referring to (b) of FIG. 6, the S-gNB 610 may transmit a handover request to the AMF 630. Herein, the AMF 630 may transmit the handover request of the S-gNB 610 to the T-gNB 620. The T-gNB 620 may reject a slice currently used by a terminal based on a slice re-mapping policy and determine a slice re-mapping and fallback operation. The T-gNB 620 may transmit a response message including slice re-mapping and fallback information to the AMF 630, and the AMF 630 may transmit a command message including the slice re-mapping and fallback information to the S-gNB 610.

As another example, to support continuity of a network slice service, a PDU session may be connected with a plurality of single network slice selection assistance information (S-NSSAIs). The S-NSSAI is an identifier for identifying a network slice and may be composed of a slice/service type (SST) and a slice differentiator (SD).

In case a network function (NF) (e.g., AMF, SMF, UPF...) of a network slice instance supports a plurality of S-NSSAIs, the NF may divide and use resources according to the S-NSSAIs. As an example, even when a specific S-NSSAI is congested with resources, another S-NSSAI may not be congested with resources. Considering the above-described situation, if a specific S-NSSAI is congested, a network may enable a PDU session to be connected with an additional S-NSSAI such that service continuity may be provided. As an example, one S-NSSAI resource allocated to an SMF and/or a UPF may be shared with another S-NSSAI, when the another S-NSSAI is congested.

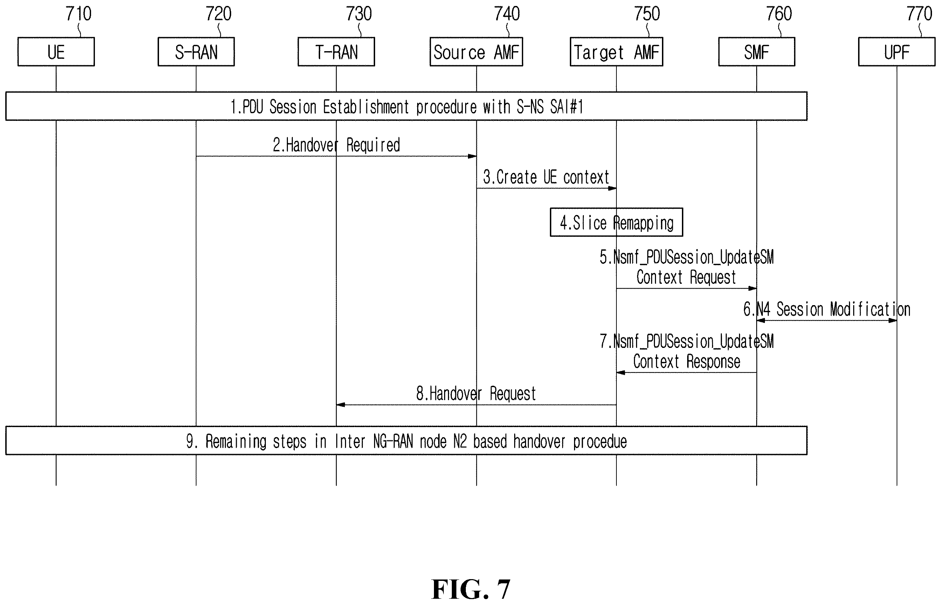

FIG. 7 is a view showing a method for performing handover by considering additional S-NSSAI applicable to the present disclosure. Referring to FIG. 7, a terminal 710 may configure a PDU session based on an S-NSSAI#1 with a source RAN (S-RAN) 720. Next, the S-RAN 720 may perform terminal measurement, determine a handover to a target RAN (T-RAN) 730 based on the terminal measurement, and transmit a handover request message to a source AMF 740. As an example, the handover request message may include a container conveyed from a T-RAN node information source to a target, an SM N2 information list and a PDU session ID, but may not be limited thereto.

Next, the source AMF 740 may select the target AMF 750 and generate a UE context in the target AMF 750. As an example, the targetAMF 750 may receive an indication of congested state of the S-NSSAI#1 from a core network. Herein, the target AMF 750 needs to maintain service continuity of the terminal and to this end, may check whether an S-NSSAI#2, which is another S-NSSAI, is supported in the T-RAN 730. If the S-NSSAI#2 is supported in the T-RAN 730, the target AMF 750 may determine to associate the S-NSSAI#2 with a PDU session. To this end, the AMF 750 may transmit an SM context create or update request for the PDU session (e.g., Nsmf_ PDUSession_CreateSMContext) to an SMF 760. As an example, the SM context create or update request may include a PDU session ID, the S-NSSAI#2 and N2 SM information but is not limited thereto. In case the S-NSSAI#2 is added as an associated network slice for the PDU session, the SMF 760 may determine that the PDU session is associated with the S-NSSAI#1 and the S-NSSAI#2. Next, the SMF 760 may deliver a session establishment message to a UPF 770 in order to update N4 session information in the UPF 770. Next, the SMF 760 may deliver an SM context or update response message for the PDU session to the target AMF 750. As an example, in case there is no network slice or slice instance available for the PDU session, the SMF 760 may deliver a PDU session reject message together with a cause indicating slice re-mapping failure to the target AMF 750. Next, the target AMF 750 may transmit a handover request to the T-RAN 730, and a handover procedure may be performed.

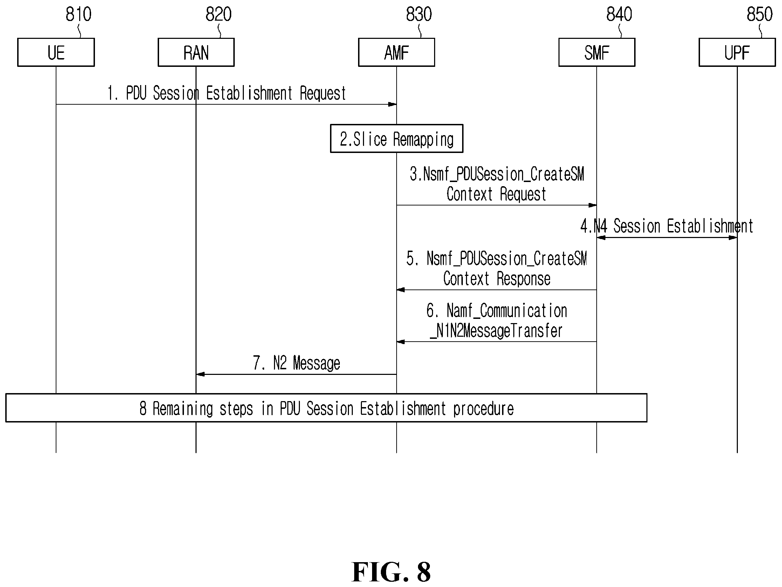

FIG. 8 is a view showing a network slice re-mapping operation applicable to the present disclosure. Referring to FIG. 8, a terminal 810 may deliver a protocol data unit (PDU) session establishment request to an AMF 830. Herein, the PDU session establishment request may include an S-NSSAI#1. As an example, although the S-NSSAI#1 is not available, a network may permit a PDU session request of the terminal including the S-NSSAI#1 in order to provide service continuity. The S-NSSAI#1 may be unavailable based on congestion control in a core network but may not be limited thereto. The AMF 830 may determine that the requested PDU session is associated with an additional S-NNSSAI#2. To this end, based on slice re-mapping, the AMF 830 may transmit an SM context create or update request for a PDU session (e.g., Nsmf_PDUSession_CreateSMContext) to an SMF 840. As an example, the SM context create or update request may include a PDU session ID, the S-NSSAI#2 and N2 SM information but is not limited thereto. In case the S-NSSAI#2 is added as an associated network slice for the PDU session, the SMF 840 may determine that the PDU session is associated with the S-NSSAI#1 and the S-NSSAI#2. Next, the SMF 840 may deliver a session establishment message to a UPF 850 in order to update N4 session information in a UPF 850. Next, the SMF 840 may transmit an N1N2 message to the AMF 830. As an example, in case the S-NSSAI#2 is added as a network slice for establishing a PDU session, information related to the S-NSSAI#2 may indicate that the S-NSSAI#2 is added as a network slice for establishing the PDU session.

As another example, in case the S-NSSAI#2 is an alternative network slice for establishing a PDU session, information related to the S-NSSAI#2 may indicate that the S-NSSAI#2 is replaced by a network slice to establish the PDU session.

In addition, the N1N2 message may include a PDU session establishment accept indication that a PDU session is established by the S-NSSAI#2. The AMF 830 may deliver information indicating that the S-NSSAI#2 is used for the PDU session, through a DL NAS message.

As another example, even when the S-NSSAI# 1 is unavailable for a long time, a network function (e.g., RAN, AMF, SMF) may maintain slice re-mapping information in consideration of a future PDU session request for the S-NSSAI# 1 from a terminal. As an example, in the case of a multiple access (MA) PDU session, a terminal may request PDU session establishment including an S-NSSAI included in accepted NSSAIs of another access.

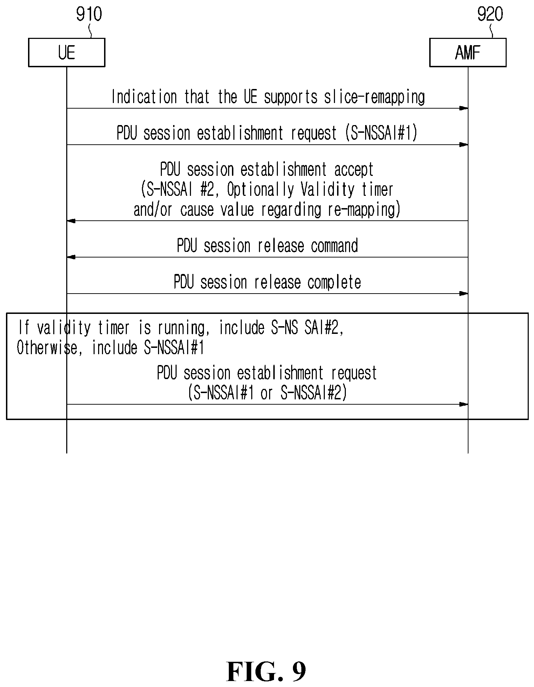

In addition, as an example, a method for operating a terminal based on a slice re-mapping procedure may be needed. FIG. 9 is a view showing an operation of a terminal for supporting network slice applicable to the present disclosure. Referring to FIG. 9, a terminal 910 may transmit information indicating that network slice re-mapping is supported, to an AMF 920. Next, the terminal 910 may deliver a PDU session establishment request including an S-NSSAI#1 to the AMF 920. Herein, the AMF 920 may determine that a requested PDU session is associated with an additional S-NSSAI#2, and perform the operation of FIG. 8. Next, the AMF 920 may transmit a PDU session establishment accept message to the terminal 910. As an example, the PDU session establishment accept message may include the S-NSSAI#2 based on network slice re-mapping. As another example, the PDU session establishment accept message may include at least one of a validity timer and a cause value related to re-mapping.

Next, in case the terminal 910 obtains a PDU session release command from the AMF 920, the terminal 910 may release the PDU session and deliver a PDU session release complete message to the AMF 920. Herein, if the terminal 910 wants to configure a PDU session again, the terminal 910 may transmit a PDU session establishment request message including the S-NSSAI#1 and the S-NSSAI#2 to the AMF 920. That is, the terminal 910 may transmit, to the AMF 920, a PDU session establishment request message including network slice identification information preceding slice re-mapping or a PDU session establishment request message including network slice identification information following slice re-mapping.

As a specific example, if the validity timer included in the PDU session establishment accept message is running, the terminal may transmit a PDU session establishment request message including the S-NSSAI#2 to the AMF 920. That is, the terminal may transmit a PDU session establishment request message including network slice identification information following slice re-mapping to the AMF 920. On the other hand, if the validity timer expires, the terminal may transmit a PDU session establishment request message including the S-NSSAI#1 to the AMF 920. That is, the terminal may transmit a PDU session establishment request message including network slice identification information preceding slice re-mapping to the AMF 920.

The validity timer included in the PDU session establishment accept message may indicate a time when an associated network slice based on network slice re-mapping is valid, and the terminal 910 may use the associated network slice based on network slice re-mapping within the time.

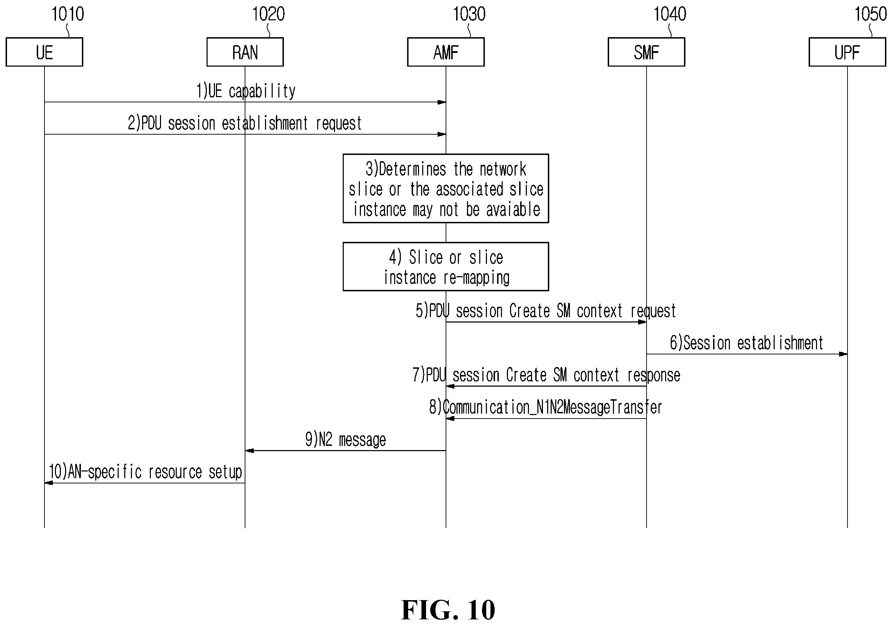

As a specific example, FIG. 10 is a view showing an operation of a terminal for supporting network slice applicable to the present disclosure. Referring to FIG. 10, a terminal 1010 may transmit terminal capability information to an AMF 1020. Herein, the terminal capability information may include information indicating whether or not the terminal supports network slice re-mapping. As an example, a network slice re-mapping procedure may be an AS-based capability or an NAS-based capability. As another example, the network slice re-mapping procedure may be a capability based on both AS and NAS layers and is not limited to a specific embodiment. Next, the terminal 1010 may check whether a requested S-NSSAI is accepted in a current access network or another access network. In addition, the terminal 1010 may deliver a PDU session establishment request including the S-NSSAI#1 to the AMF 1030. Herein, the AMF 1030 may determine that a network slice or an associated slice instance is not accepted. As an example, the AMF 1030 may receive an indication that a requested network slice (S-NSSAI#1) or an associated network slice instance is not accepted based on congestion control of a network. Based on the indication, the AMF 1030 may determine that S-NSSAI#1 requested for a PDU session from the terminal 1010 is not accepted. In addition, the AMF 1030 may determine that the requested S-NSSAI#1 is not accepted for a specific duration, based on information stored in the AMF or information received from another network function.

Herein, the AMF 1030 may check whether or not the S-NSSAI#2 is supported. Alternatively, the AMF 1030 may check network slice information shared through another network slice in order to identify another available network slice for the S-NSSAI#1. In case a network slice associated with the S-NSSAI#1 is unavailable and another network slice instance is available, the AMF 1030 may update additional network slice instance information and perform a PDU session establishment procedure. As an example, for another network slice, a shared slice instance of the S-NSSAI#2 may be available for the S-NSSAI#1.

Herein, in case the S-NSSAI#2 is supportable in a RAN node 1020, the AMF 1030 may determine that the additional S-NSSAI#2 is associated with a PDU session. Next, the AMF 1030 may transmit an SM context create or update request for a PDU session (e.g., Nsmf_PDUSession_CreateSMContext) to an SMF 1040. As an example, the SM context create or update request may include additional network slice information of the S-NSSAI#1 or the S-NSSAI#2 as alternative network slice information. In addition, as an example, the SM context create or update request may further include information on a time period where the S-NSSAI#1 is not valid. That is, the AMF 1030 may deliver the information on the time period where the S-NSSAI#1 is not valid, to the SMF 1040.

In case an associated network slice is replaced for a PDU session, the SMF 1040 may determine that the PDU session is associated with the S-NSSAI#2.

As another example, in case the S-NSSAI#2 is added as an associated network slice for a PDU session, the SMF 1040 may determine that the PDU session is associated with the S-NSSAI#1 and the S-NSSAI#2. Next, the SMF 1040 may deliver a session establishment message to a UPF 1050 in order to update N4 session information in the UPF 1050. Next, the SMF 1040 may deliver an SM context or update response message for the PDU session to the AMF 1030.

Herein, as an example, in case there is no network slice or slice instance available for the PDU session, the SMF 1040 may deliver a PDU session reject message with a cause indicating slice re-mapping failure to the AMF 1030 as the SM context or update response message for the PDU session. As another example, in case there is no network slice or slice instance available for the PDU session, the SMF 1040 may determine a time period where the S-NSSAI#1 is not valid and may include information on the time period in a PDU session reject message and indicate the information to the AMF 1030.

After the SMF 1040 transmits the SM context or update response message for the PDU session, the SMF 1040 may transmit an N1N2 message to the AMF 1030. Herein, the N1N2 message may include information on the S-NSSAI#2 information. As an example, in case the S-NSSAI#2 is added as a network slice for establishing a PDU session, the N1N2 message may include S-NSSAI#2 information indicating that the S-NSSAI#2 is added as a network slice for establishing the PDU session.

As another example, in case the S-NSSAI#2 is an alternative network slice for establishing a PDU session, the NIN2 message may include S-NSSAI#2 information indicating that the S-NSSAI#2 is replaced by a network slice to establish the PDU session.

As another example, the SMF 1040 may transmit invalidity time period information of the S-NSSAI#1 or validity time period information of the S-NSSAI#2 to the AMF 1030. Herein, the N1N2 message may include a PDU session establishment accept message by the S-NSSAI#2.

As an example, the PDU session establishment accept message may include the invalidity time period information of the S-NSSAI#1, and the terminal may not perform a PDU session request using the S-NSSAI#1 until an invalidity time period of the S-NSSAI#1 expires. As a specific example, the invalidity time period information of the S-NSSAI#1 may be a backoff timer of the S-NSSAI#. That is, the terminal may not perform the PDU session request until the backoff timer of the S-NSSAI#expires.

As an example, the PDU session establishment accept message may be transmitted to the SMF 1040 based on a slice re-mapping procedure. As an example, the PDU session establishment accept message may include the invalidity time period of the S-NSSAI#1 or a backoff timer value as time period information for requesting a PDU session through the S-NSSAI#2 instead of the S-NSSAI#1, as shown in Table 1 below. However, Table 1 is merely one example, and the present disclosure is not limited thereto.

**[Table 1]**

| **IEI** | **Information Element** | **Type/Reference** | **Presence** | **Format** | **Length** |
|---|---|---|---|---|---|
| | Extended protocol discriminator | Extended protocol discriminator | M | V | 1 |
| | PDU session ID | PDU session identity | M | V | 1 |
| | PTI | Procedure transaction identity | M | V | 1 |
| | PDU SESSION ESTABLISHMENT ACCEPT message identity | Message type | M | V | 1 |
| | Selected PDU session type | PDU session type | M | V | 1/2 |
| | Selected SSC mode | SSC mode | M | V | 1/2 |
| | Authorized QoS rules | QoS rules | M | LV-E | 6-65538 |
| | Session AMBR | Session-AMBR | M | LV | 7 |
| 59 | 5GSM cause | 5GSM cause | O | TV | 2 |
| 29 | PDU address | PDU address | O | TLV | 7-31 |
| 56 | RQ timer value | GPRS timer | O | TV | 2 |
| 22 | S-NSSAI | S-NSSAI | O | TLV | 3-10 |
| 8- | Always-on PDU session indication | Always-on PDU session indication | O | TV | 1 |
| 75 | Mapped EPS bearer contexts | Mapped EPS bearer contexts | O | TLV-E | 7-65538 |
| 78 | EAP message | EAP message | O | TLV-E | 7-1503 |
| 79 | Authorized QoS flow descriptions | QoS flow descriptions | O | TLV-E | 6-65538 |
| 7B | Extended protocol configuration options | Extended protocol configuration options | O | TLV-E | 4-65538 |
| 25 | DNN | DNN | O | TLV | 3-102 |
| 17 | 5GSM network feature support | 5GSM network feature support | O | TLV | 3-15 |
| 18 | Serving PLMN rate control | Serving PLMN rate control | O | TLV | 4 |
| 77 | ATSSS container | ATSSS container | O | TLV-E | 3-65538 |
| C- | Control plane only indication | Control plane only indication | O | TV | 1 |
| 66 | IP header compression configuration | IP header compression configuration | O | TLV | 5-257 |
| 1F | Ethernet header compression configuration | Ethernet header compression configuration | O | TLV | 3 |
| 72 | Service-level-AA container | Service-level-AA container | O | TLV-E | 6-n |
| 71 | Received MBS container | Received MBS container | O | TLV-E | 9-65538 |
| . | . | . | . | . | . |
| . | . | . | . | . | . |
| . | . | . | . | . | . |
| **xx** | **Re-mapping back-off timer value** | **-** | **-** | **-** | **-** |

The AMF 1030 may deliver information indicating that the S-NSSAI#2 is used for the PDU session, through a DL NAS message. As an example, the message may include invalidity time period information of the S-NSSAI#1 or validity time period information of the S-NSSAI#2 but may not be limited thereto. As another example, the DL NAS message include the invalidity time period of the S-NSSAI#1 or a backoff timer value as time period information for requesting a PDU session through the S-NSSAI#2 instead of the S-NSSAI#1, as shown in Table 2 below. However, Table 2 is merely one example, and the present disclosure is not limited thereto.

**[Table 2]**

| IEI | Information Element | Type/Reference | Presence | Format | Length |
|---|---|---|---|---|---|
| | Extended protocol discriminator | Extended protocol discriminator | M | V | 1 |
| | Security header type | Security header type | M | V | 1/2 |
| | Spare half octet | Spare half octet | M | V | 1/2 |
| | DL NAS TRANSPORT message identity | Message type | M | V | 1 |
| | Payload container type | Payload container type | M | V | 1/2 |
| | Spare half octet | Spare half octet | M | V | 1/2 |
| | Payload container | Payload container | M | LV-E | 3-65537 |
| 12 | PDU session ID | PDU session identity 2 | C | TV | 2 |
| 24 | Additional information | Additional information | O | TLV | 3-n |
| 58 | 5GMM cause | 5GMM cause | O | TV | 2 |
| 37 | Back-off timer value | GPRS timer 3 | O | TLV | 3 |
| 3A | Lower bound timer value | GPRS timer 3 | O | TLV | 3 |
| . | . | . | . | . | . |
| . | . | . | . | . | . |
| . | . | . | . | . | . |
| **xx** | **Re-mapping back-off timer value** | **-** | **-** | **-** | **-** |

As another example, a PDU session establishment reject may be given as feedback on the DL NAS message and be delivered to the terminal together with a rejection cause. Herein, the rejection cause may indicate re-mapping failure of the S-NSSAI#1 but not be limited thereto.

Next, the AMF 1030 may transmit an N2 PDU session message including N2 SM information to the RAN node 1020. In addition, the RAN node 1020 may configure an AN-specific resource setup.

As shown in the above description, in case a PDU session is re-mapped from an old-S-NASSI associated therewith to an alternative S-NSSAI, a core network may deliver timer information together with slice re-mapping information to a terminal. Herein, if the terminal performs a connection request for the PDU session, the terminal may perform the connection request by using not the old-S-NSSAI but the alternative S-NSSAI based on the timer information.

That is, after slice re-mapping occurs, the terminal may receive slice re-mapping information and use an S-NSSAI that is newly associated at the PDU session connection request. Thus, an additional operation for slice re-mapping to the core network may not be required. In addition, because the terminal perceives a validity time of slice re-mapping configuration, the terminal may perform the PDU session connection request by using the old-S-NSSAI again, without receiving separate recovery information from the core network after the slice re-mapping configuration expires.

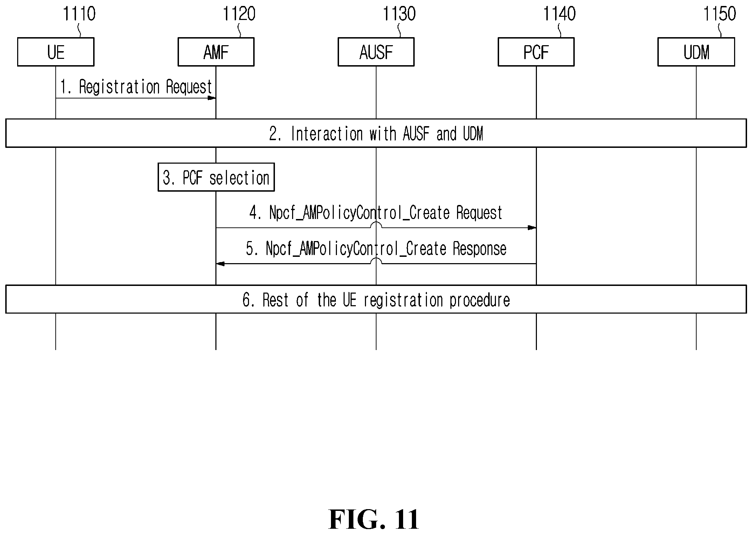

FIG. 11 is a view showing a method for conveying slice re-mapping capability information for network slice service continuity applicable to the present disclosure. Referring to FIG. 11, when a terminal 1110 transmits a registration request message to an AMF 1120, the AMF 1120 may select a PCF 1140, which supports slice re-mapping, and obtain information for slice re-mapping. As an example, during a registration procedure, if network re-mapping occurs based on a policy obtained from the PCF 1140, the AMF 1120 may perform interaction with the PCF 1140 to obtain a re-mapped S-NSSAI of each PDU session that requests network slice re-mapping.

As a specific example, referring to FIG. 11, the terminal 1110 may transmit a registration request to the AMF 1120. The AMF 1120 may perform interaction with an AUSF 1130 and a UDM 1150. As an example, in case the AMF 1120 supports slice re-mapping and performs a PCF search and selection procedure, the AMF 1120 may use an NRF or a local configuration to select the PCF 1140 that supports slice re-mapping. Next, the AMF 1120 may transmit an AM policy create request (e.g., Npcf_AMpolicyControl_Create Request) to the PCF 1140. Based on the AM policy request, the PCF 1140 may deliver a policy including a PCR trigger to the AMF 1120 through an AM policy create response (e.g., Npcf_AMpolicyControl_Create Response). Herein, the PCR trigger may enable the AMF 1120 to perform interaction with the PCF 1140, when a network slice requesting slice re-mapping occurs to the AMF 1120.

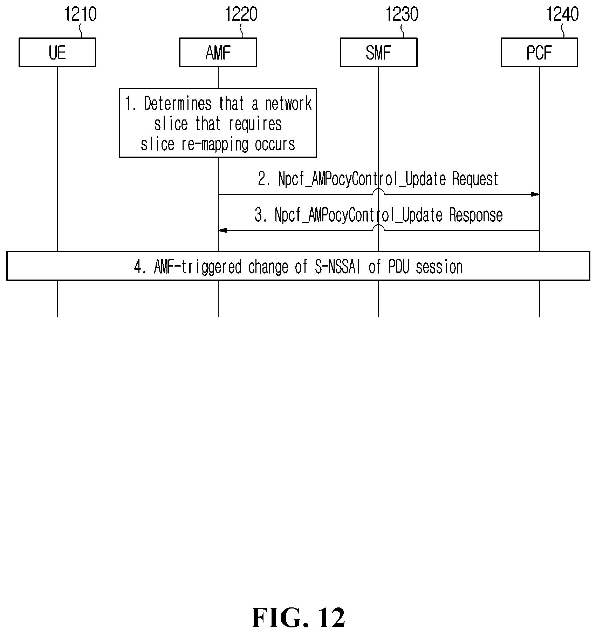

FIG. 12 is a view showing a method for changing S-NSSAI of a PDU session applicable to the present disclosure. As an example, a PCF may configure information on pairs of network slices that may be used alternatively to each other. Slices may support a same service based on a same DNAI indicating identical DNNs and identical DNs but may not be limited thereto.

Referring to FIG. 12, a network slice requiring slice re-mapping may occur to an AMF 1220. The AMF 1220 may transmit an AM policy update request (e.g., Npct AMpolicyControl Update Request) to a PCF 1240. As an example, the AM policy update request may include an AM policy-related ID and S-NSSAI requiring slice re-mapping. In case the AMF 1220 obtains the above-described PCR trigger and a network slice requiring slice re-mapping occurs, the AMF may perform an AM policy-related modification procedure with the PCF 1240.

Next, the AMF 1220 may obtain an AM policy update response (e.g., Npcf_AMpolicyControl_Update Response) including the AM policy-related ID and selected S-NSSAI information from the PCF 1240. Next, an S-NSSAI change procedure of a PDU session, which is triggered by the AMF 1220, may be performed.

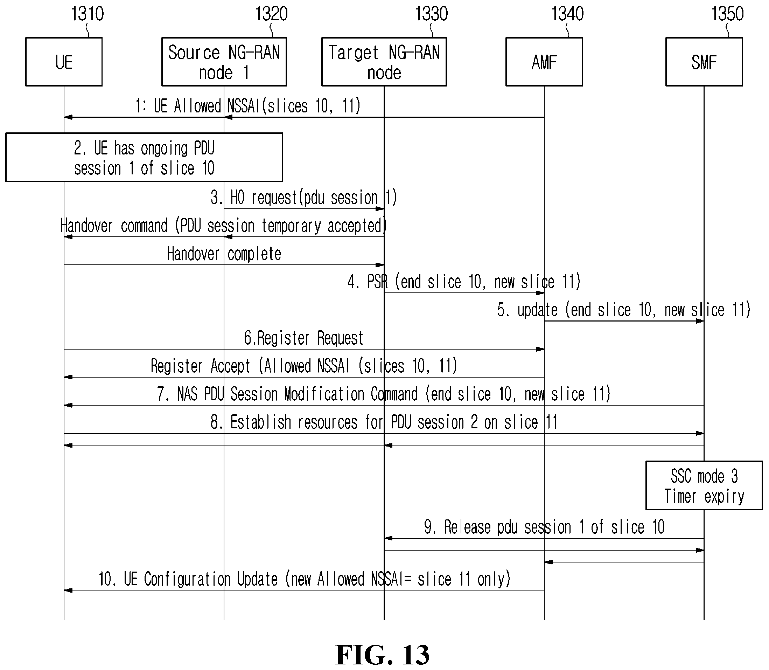

FIG. 13 is a view showing a method for supporting network slice service continuity based on session and service continuity (SSC) 3 applicable to the present disclosure.

Referring to FIG. 13, it is possible to consider a case in which re-mapping from a slice 10 to a slice 11 is performed in a RAN node. However, FIG. 13 is merely one example for convenience of explanation but is not limited thereto. An AMF 1330 may provide UE allowed NSSAI to the RAN node. As an example, a terminal 1310 may use the slice 10 for a PDU session. Herein, a source RAN node 1 1320 may deliver a handover request for an ongoing PDU session to a target RAN node 2 1330. As an example, in a handover procedure, the target RAN node 2 1330 may indicate to the source RAN node 1 1320 that the slice 10-based ongoing PDU session is temporary. Herein, based on slice re-mapping, the target RAN node 2 1330 may also provide the source RAN node 1 1320 with slice 11 information for the ongoing PDU session. Next, after the handover is completed, the target RAN node 2 1330 may transmit a path switch request to the AMF 1340 in order to create a slice 11-based PDU session when the slice 10-based PDU session expires. The AMF 1340 may transmit an update request to an SMF 1350 to terminate the slice 10-based PDU session and to re-map the slice 11-based PDU session.

Next, the terminal 1310 may transmit a registration request message to the AMF 1340 and receive a registration accept message including an allowed NSSAI from the AMF 1340. Herein, if the terminal 1310 indicates that SSC mode 3 is supported, the SMF 1350 may deliver, to the terminal 1310, a PDU session modification command message including information indicating that the slice 10 for a PDU session expires and the new slice 11 for the PDU session is used. As an example, SSC mode 1 may be a case in which an anchor UPF connecting the terminal and a data network is fixed and an IP address continue to be used. SSC mode 2 may be a case in which a terminal terminates a connection to a previous UPF first and then is connected to a new UPF. SSC mode 3 may be a case in which a terminal releases an existing UPF after being connected to a new UPF.

Accordingly, in FIG. 11, based on an SSC mode 3 procedure, the terminal 1310 may temporarily maintain a slice 10-based PDU session, while transmitting a slice 11-based PDU session request and establishing a PDU session. Based on the expiration of an SSC mode 3 timer, the SMF 1340 may release the slice 10-based PDU session according to the SSC mode 3 procedure. When the slice 10-based PDU session is released, the AMF 1340 may transmit a terminal configuration update message to a RAN and the terminal in order to update the allowed NSSAI. As an example, the updated NSSAI may be the slice 11 but not be limited thereto. That is, the terminal supports SSC mode 3, a PDU session for a new slice is configured based on slice re-mapping, and then a PDU session for an existing slice may be released.

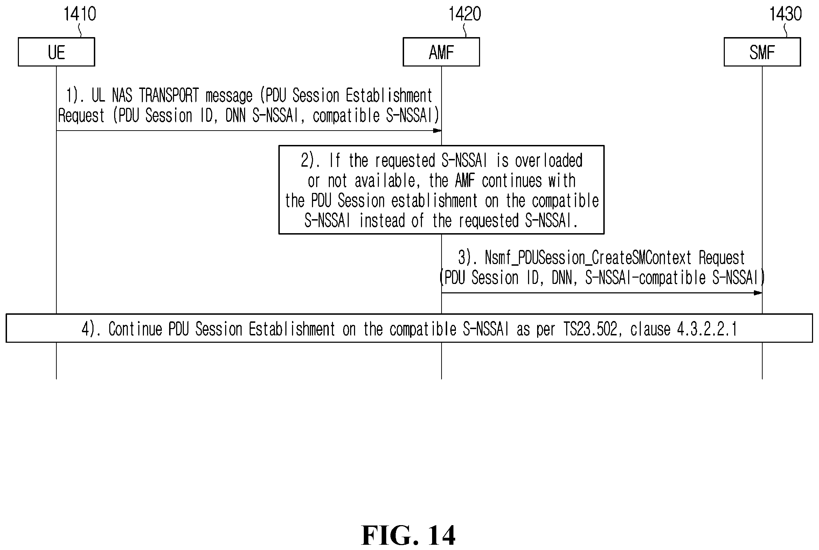

FIG. 14 is a view showing a method for maintaining network slice service continuity based on a compatible network slice applicable to the present disclosure. Referring to FIG. 14, in case an initially requested network slice of a PDU session is unavailable, the PDU session may be configured through a compatible network slice. As an example, a terminal may select one or more network slices through network slice selection criteria (NSSP) based on a URSP rule. As a specific example, a PDU session establishment request, which a terminal 1410 transmits to an AMF 1420, may include a compatible S-NSSAI together with a PDU session ID, a DNN and an S-NSSAI. Next, if the requested S-NSSAI is overloaded or unavailable, the AMF 1420 may perform a PDU session establishment procedure through not the requested S-NSSAI but the compatible S-NSSAI. Herein, the AMF 1420 may transmit an SM context request including not only the PDU session ID and the DNN but also the compatible S-NSSAI to an SMF 1430. Next, the terminal 1410, the AMF 1420 and the SMF 1430 may perform the PDU establishment procedure based on the compatible S-NSSAI.

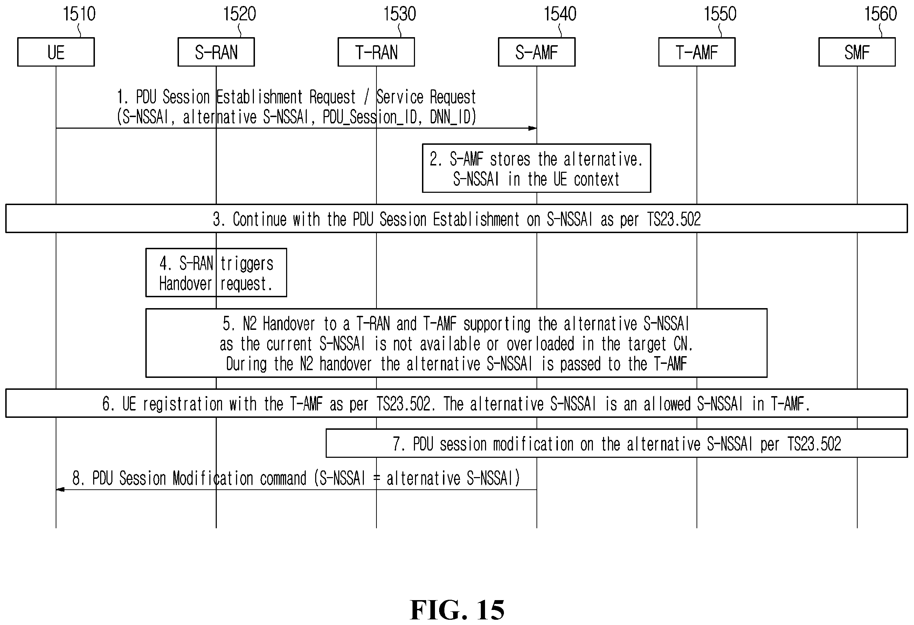

FIG. 15 is a view showing a method for performing PDU session handover to a target CN supporting alternative S-NSSAI applicable to the present disclosure. Referring to FIG. 15, in case a current network slice is not supported by a target CN or a target is overloaded, a PDU session establishment request may be performed based on an alternative S-NSSAI. As an example, the alternative S-NSSAI may be an S-NSSAI that satisfies network slice selection criteria based on a URSP rule. As an example, the alternative S-NSSAI may be included in the PDU session establishment request transmitted by a terminal and may be stored in an AMF together with a UE context. Herein, in case a requested S-NSSAI is not supported in a target CN or the target CN is overloaded, a PDU session may be established based on the alternative S-NSSAI. Herein, as an example, the PDU session may be established based on SSC mode 2.

As a specific example, referring to FIG. 15, a terminal 1510 may transmit a PDU session establishment request or a service request including an S-NSSAI, an alternative S-NSSIA, a PDU session ID and a DNN ID to a source-AMF (S-AMF) 1540. Next, the S-AMF 1540 may store the alternative S-NSSAI in a terminal context. Herein, in case a PDU session establishment procedure is performed, an S-RAN 1520 may trigger a handover request. As an example, in case a current S-NSSAI is unavailable or a target CN is overloaded, a handover may be performed to a T-RAN 1530 and a T-AMF 1550 supporting the alternative S-NSSAI. As an example, in a handover procedure, the alternative S-NSSAI may be delivered to the T-AMF 1550. Next, the terminal may be registered in the T-AMF 1550, and the alternative S-NSSAI may be included in allowed S-NSSAIs of the T-AMF 1550. Next, the T-RAN 1530 may deliver a PDU session modification command including the alternative S-NSSAI to the terminal 1510.

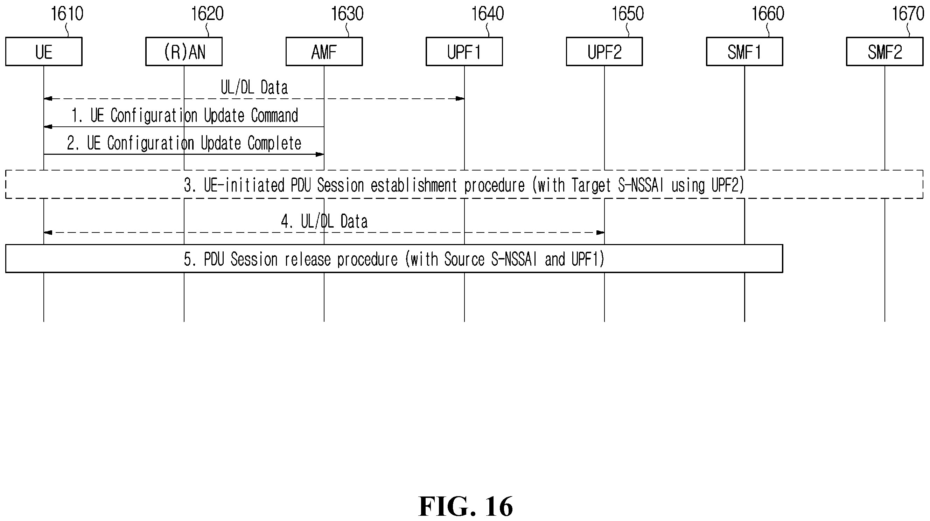

FIG. 16 is a view showing a method by which a network controls terminal slice use applicable to the present disclosure. As an example, an operator may control network slice usage by considering network performance. As another example, an operator may control network slice usage based on a resource of a network slice or other causes. Herein, the operator may release a terminal with a network slice not establishing a PDU session or the network slice of the terminal. Alternatively, the operator may release a terminal with an inactivated PDU session or a network slice of the terminal.

As another example, an operator may transfer an ongoing PDU session from one network slice to another network slice. Herein, the another network slice may be included or expected to be included in an allowed NSSAI.

As an example, referring to FIG. 16, transfer from a source slice to a target slice may be performed by a terminal. A terminal 1610 may perform data transmission and reception through a UPF1 1640. Herein, for transfer to a target S-NSSAI, an AMF 1630 may deliver a terminal configuration update command to the terminal 1610. As an example, the terminal configuration update command may include information on a network slice to be released a new added network slice. In addition, as an example, a backoff timer for a source S-NSSAI may also be provided in the terminal configuration update command. Thus, the terminal may not request a PDU session based on an existing URSP rule until the backoff timer expires. The terminal 1610 may deliver UE configuration update complete to the AMF 1630. Next, a terminal-initiated PDU session establishment procedure may be performed. As an example, the terminal 1610 may perform a procedure for establishing a PDU session with a UPF 2 1650 that uses the target S-NSSAI, and may perform data transmission and reception after establishing the session. Next, the terminal may perform a PDU session release procedure for the UPF 1 and the source S-NSSAI.

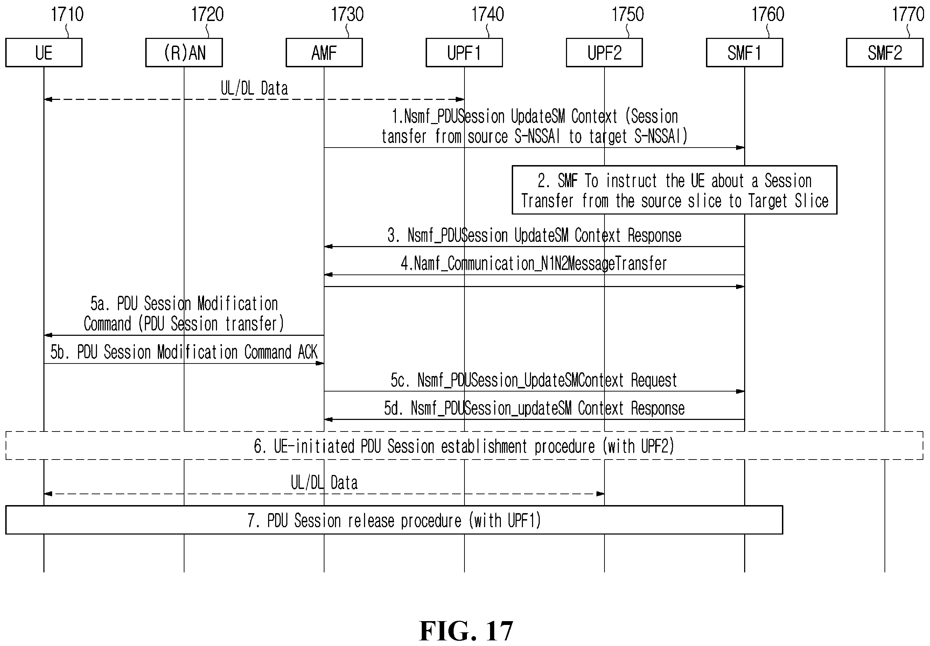

FIG. 17 is a view showing a method by which a network controls terminal slice use applicable to the present disclosure. Referring to FIG. 17, transfer from a source slice to a target slice may be performed by a network. A terminal 1710 may perform data transmission and reception through a UPF 1 1740. Herein, an AMF 1730 may transmit an SM context update request (e.g., Nsmf_PDUSession_UpdateSMContext Request) to an SMF 1 1760 to transfer a source slice of a PDU session to a target slice. The SMF 1 1760 may deliver a PDU session modification command to the terminal in order to indicate that the PDU session is transferred from the source slice to the target slice. Next, the SMF 1 1760 may transmit an SM context update response (e.g., Nsmf_PDUSession_UpdateSMContext Response) to the AMF 1730. In addition, the AMF 1730 and the SMF 1 1760 may perform N1N2 message exchange. Next, the AMF 1730 may deliver a PDU session modification command indicating network slice transfer of the PDU session to the terminal 1710, and the terminal 1710 may deliver a PDU session modification command ACK response to the AMF 1730. Next, the AMF 1730 may exchange an SM context update request and a response with the SMF 1 1760. Next, a terminal-initiated PDU session establishment procedure may be performed. As an example, the terminal 1710 may perform a procedure for establishing a PDU session with a UPF 2 1750 that uses a target S-NSSAI, and may perform data transmission and reception after establishing the session. Next, the terminal 1710 may perform a PDU session release procedure for the UPF 1 and a source S-NSSAI.

Based on the above-described FIG. 11, FIG. 12, FIG. 13, FIG. 16 and FIG. 17, when an SMF indicates a PDU session creation using a new slice to a terminal through a PDU session modification command or a PDU session release command, or based on the above-described FIG. 14 and FIG. 15, when the SMF indicates modified slice information to the terminal through a PDU session establishment accept or PDU session modification command, the SMF may also provide backoff timer information for an existing slice, while providing the modified slice information.

As an example, the SMF may transmit a cause value (e.g. cause value #69 "insufficient resources for specific slice") used for slice-based NAS congestion control to make the existing slice unavailable during the backoff timer.

As another example, the SMF may define a new cause value based on slice re-mapping and use the new cause value to make the existing slice unavailable during the backoff timer. The SMF may also transmit information on the existing slice and indicate which slice the backoff timer is related to, to the terminal based on the information.

As an example, because the slice is unavailable to the terminal during the backoff timer, the terminal may reevaluate a URSP rule. As another example, because the existing slice is still unavailable to the terminal even if the terminal evaluates the URSP rule by a new application, the terminal may find another rule among URSP rules and create a PDU session.

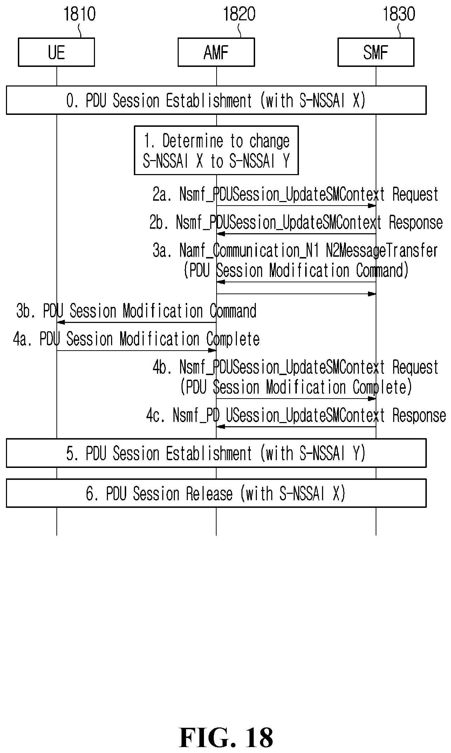

As a specific example, FIG. 18 is a view showing a method for indicating modified slice information to a terminal through a PDU session modification command.

Referring to FIG. 18, a terminal 1810 may create a PDU session through an S-NSSAI X and a data network name (DNN) A based on a URSP rule or a UE local configuration. However, this is merely one example for convenience of explanation, but the present disclosure may not be limited thereto. Next, an AMF 1820 may determine to modify the S-NSSAI X to an S-NSSAI Y. As an example, as described above, the AMF 1820 may determine that a CN related to the S-NSSAI X is congested and may modify the slice of a PDU session from the S-NSSAI X to the S-NSSAI Y. As an example, the CN related to the S-NSSAI X may be congested for causes such as a handover of a terminal and the addition of an intermediate-SMF (I-SMF) but may not be limited to a specific embodiment.

As an example, the AMF 1820 may determine on its own that the S-NSSAI X is to be modified to the S-NSSAI Y. As another example, the AMF 1820 may interact with a PCF to make the S-NSSAI X modified to the S-NSSAI Y but is not limited to a specific embodiment.

The AMF 1820 may transmit information for requesting modification of the slice of a PDU session from the S-NSSAI X to the S-NSSAI Y or information for requesting creation of a PDU session using the S-NSSAI Y (e.g., Nsmf_PDUSession_UpdateSMContext Request) to an SMF 1830 that manages the PDU session created by the S-NSSAI X and the DNN A. As an example, the AMF 1820 may also transmit a backoff timer value for the S-NSSAI X to the SMF 1830, when transmitting the above-described request. Next, the AMF 1820 may obtain a response to the request information (e.g., Nsmf_PDUSession_UpdateSMContext Response) from the SMF 1830. In addition, the SMF 1830 may transmit a PDU session modification command message to the AMF 1820 to create the PDU session using the S-NSSAI Y. As an example, the message may include information instructing creation of the new PDU session using the S-NSSAI Y and the existing DNN A. In addition, the SMF 1830 may also transmit a timer for the PDU session. Herein, the timer may indicate a time until which the ongoing PDU session is maintained, and then the SMF 1830 may initiate a procedure of releasing the PDU session for the S-NSSAI X and the DNN A. In addition, the SMF 1830 may additionally transmit a backoff timer for the S-NSSAI X. As another example, the SMF 1130 may transmit a backoff timer based on a combination of the S-NSSAI X and the DNN A, not the backoff timer for the S-NSSAI X, and is not limited to a specific embodiment.

In addition, as an example, the SMF 1830 may transmit a PDU session modification command by using N1N2 message transmission (e.g., Namf_Communication_N1N2MessageTransfer service operation). As another example, the SMF 1830 may transmit the PDU session modification command through a response to an AMF request (e.g., Nsmf_PDUSession_UpdateSMContext response), and in this case, the N1N2 message transmission may not be performed.

Next, based on the PDU session modification command received from the SMF 1830, the terminal 1810 may perceive that a procedure of creating a PDU session using the S-NSSAI Y and the DNN A should be initiated. In addition, in case the terminal 1810 obtains the back-off timer for the S-NSSAI X, the terminal 1810 may initiate the back-off timer and not create a new PDU session using the S-NSSAI X until the back-off timer expires. The terminal 1810 may deliver a PDU session modification complete to the AMF 1820 as a response to the PDU session modification command.

Next, the terminal 1810 may initiate the procedure of creating a PDU session using the S-NSSAI Y and the DNN A, and may create a new PDU session. If the PDU session is successfully created, the terminal 1810 may transmit data of applications of a PDU session created using the existing S-NSSAI X and the DNN A through the new created PDU session.

Herein, the above-described operation may be performed based on a URSP rule of a terminal. As an example, in case a specific application specified to use the S-NSSAI X and the DNN A according to the URSP rule cannot use the S-NSSAI X, as described above, the terminal 1810 may determine a PDU session for transmitting application data by using a URSP rule with low priority. Herein, if the URSP with low priority specifies that the modified S-NSSAI Y and the DNN A are not used but another slice and/or DNN is to be used, the terminal 1810 may not transmit the application to a new PDU session created through the S-NSSAI Y and the DNN A. That is, the terminal 1810 may perform data transmission by using a slice and a DNN present in the URSP rule with low priority and create a new PDU session, if necessary.

Herein, in case all application data using the S-NSSAI X and the DNN A does not need to be transmitted through a PDU session created through the S-NSSAI Y and the DNN A based on a URSP rule, the terminal 1810 may not create a PDU session using the S-NSSAI Y and the DNN A. As an example, the terminal 1810 may indicate such information by including information indicating that no PDU session using the S-NSSAI Y and the DNN A is needed, in a PDU session modification complete message.

In addition, as an example, before a timer for maintaining a PDU session received from the SMF 1830 expires, the terminal 1810 may perform a release procedure for the PDU cession using the S-NSSAI X and the DNN A. As another example, the SMF 1830 may also perform the release procedure for the PDU session after the timer expires, but is not limited to a specific embodiment.

As another example, a method of setting an AMF-based backoff timer may be considered. In case a backoff timer is set based on an AMF, the backoff timer may be set for each slice by using a terminal (UE) configuration update procedure. That is, the AMF may transmit a terminal configuration update command to the terminal and also transmit backoff timer information as well as slice information in the terminal configuration update command for slices for which re-mapping is determined. In case the terminal obtains the backoff timer information, the terminal may not be able to use a slice while the backoff timer is operating. Because the terminal cannot use the slice until the backoff timer expires, the terminal may reevaluate a URSP rule. As another example, even if the terminal performs evaluation of the URSP rule by new application traffic, the terminal cannot still use an existing slice and thus may create a PDU session based on another rule among URSP rules.

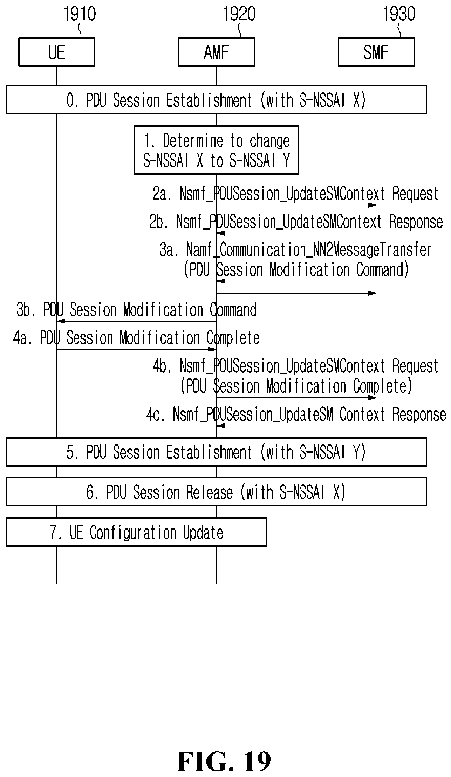

As a specific example, FIG. 19 is a view showing a method for configuring an AMF-based backoff timer. Referring to FIG. 19, a terminal 1910 may create a PDU session through an S-NSSAI X and a data network name (DNN) A based on a URSP rule or a UE local configuration. However, this is merely one example and may not be limited thereto. Next, an AMF 1920 may determine to modify the S-NSSAI X to an S-NSSAI Y. As an example, as described above, the AMF 1920 may determine that a CN related to the S-NSSAI X is congested and may modify the slice of a PDU session from the S-NSSAI X to the S-NSSAI Y. As an example, the CN related to the S-NSSAI X may be congested for causes such as a handover of the terminal and the addition of an intermediate-SMF (I-SMF) but may not be limited to a specific embodiment.

As an example, the AMF 1920 may determine on its own that the S-NSSAI X is to be modified to the S-NSSAI Y. As another example, the AMF 1920 may interact with a PCF to make the S-NSSAI X modified to the S-NSSAI Y but is not limited to a specific embodiment.

The AMF 1920 may transmit information for requesting modification of the slice of a PDU session from the S-NSSAI X to the S-NSSAI Y or information for requesting creation of a PDU session using the S-NSSAI Y (e.g., Nsmf_PDUSession_UpdateSMContext Request) to an SMF 1930 that manages the PDU session created by the S-NSSAI X and the DNN A. Based on the information obtained from the AMF 1920, the SMF 1930 may transmit a PDU session modification command message for creating the PDU session using the S-NSSAI Y. As an example, the message may include information instructing creation of the new PDU session using the S-NSSAI Y and the existing DNN A. In addition, the SMF 1930 may also transmit a timer for the PDU session. Herein, the timer may indicate a time until which the ongoing PDU session is maintained, and then the SMF 1930 may initiate a procedure of releasing the PDU session for the S-NSSAI X and the DNN A.

In addition, as an example, the SMF 1930 may transmit a PDU session modification command by using N1N2 message transmission (e.g., Namf_Communication_N1N2MessageTransfer service operation). As another example, the SMF 1930 may transmit the PDU session modification command through a response to an AMF request (e.g., Nsmf_PDUSession_UpdateSMContext response), and in this case, the N1N2 message transmission may not be performed.

Next, based on the PDU session modification command received from the SMF 1930, the terminal 1910 may perceive that a procedure of creating a PDU session using the S-NSSAI Y and the DNN A should be initiated.

The terminal 1910 may initiate the procedure of creating a PDU session using the S-NSSAI Y and the DNN A, and may create a new PDU session. If the PDU session is successfully created, the terminal 1910 may transmit data of applications of a PDU session created using the existing S-NSSAI X and the DNN A through the new created PDU session.

Herein, the above-described operation may be performed based on a URSP rule of a terminal. As an example, in case a specific application specified to use the S-NSSAI X and the DNN A according to the URSP rule cannot use the S-NSSAI X, as described above, the terminal 1910 may determine a PDU session for transmitting application data by using a URSP rule with low priority. Herein, as described above, if the URSP with low priority specifies that the modified S-NSSAI Y and the DNN A are not used but another slice and/or DNN is to be used, the terminal 1910 may not transmit the application to a new PDU session created through the S-NSSAI Y and the DNN A. That is, the terminal 1910 may perform data transmission by using a slice and a DNN present in the URSP rule with low priority and create a new PDU session, if necessary.

Herein, in case all application data using the S-NSSAI X and the DNN A does not need to be transmitted through a PDU session created through the S-NSSAI Y and the DNN A based on a URSP rule, the terminal 1910 may not create a PDU session using the S-NSSAI Y and the DNN A. As an example, the terminal 1910 may indicate such information by including information indicating that no PDU session using the S-NSSAI Y and the DNN A is needed, in a PDU session modification complete message.

In addition, as an example, before a timer for maintaining a PDU session received from the SMF 1930 expires, the terminal 1910 may perform a release procedure for the PDU cession using the S-NSSAI X and the DNN A. As another example, the SMF 1930 may also perform the release procedure for the PDU session after the timer expires, but is not limited to a specific embodiment.

Herein, the AMF 1920 may receive a message indicating completion of PDU session release (e.g., Nsmf_PDUSession_SMContextStatusNotify) from the SMF 1930. As an example, the SMF 1930 may transmit additional information to the AMF 1920 to indicate that a PDU session using the S-NSSAI X is successfully modified to a PDU session using the S-NSSAI Y. Based on the information received from the SMF 1930, the AMF 1920 may also transmit a backoff timer for the S-NSSAI X to the terminal 1910. When obtaining the backoff timer for the S-NSSAI X through a terminal configuration update procedure, the terminal 1910 may initiate the backoff timer and not include the S-NSSAI X in a requested NSSAI until the backoff timer expires. That is, the terminal 1210 may not request the S-NSSAI until the backoff timer expires. Herein, as an example, the AMF 1920 may perform the terminal configuration update procedure at any time after it is determined that the S-NSSAI X is to be modified to the S-NSSAI Y, but is not limited to a specific form.

As another example, a method of delivering backoff timer information together with an AMF-based rejected NSSAI may be considered. In case an AMF determines to use a new slice instead of an existing slice, the AMF may include the existing slice in a rejected NSSAI by using a terminal configuration update procedure.

As an example, an AMF may add a used slice to a rejected NSSAI by using above-described existing cause value or a new cause value considering slice re-mapping. Herein, a backoff timer may be transmitted together with a corresponding cause value.

As an example, in case slice re-mapping occurs for a plurality of slices, an AMF may transmit different backoff timers to a terminal. As another example, in case slice re-mapping occurs for a plurality of slices, the AMF may transmit a common backoff time dedicated to all the slices subject to re-mapping to the terminal. When the terminal obtains the backoff timer, the terminal may not be able to use at least one slice related to the backoff timer during the backoff timer.

Herein, because the terminal cannot use the slice, the terminal may reevaluate a URSP rule. As another example, because the existing slice is still unavailable to the terminal even if the terminal evaluates the URSP rule by a new application, the terminal may find another rule among URSP rules and create a PDU session.

As a specific example, in FIG. 19 described above, the terminal 1910 may create a PDU session through an S-NSSAI X and a data network name (DNN) A based on a URSP rule or a UE local configuration. However, this is merely one example and may not be limited thereto. Next, the AMF 1920 may determine to modify the S-NSSAI X to an S-NSSAI Y. As an example, as described above, the AMF 1920 may determine that a CN related to the S-NSSAI X is congested and may modify the slice of a PDU session from the S-NSSAI X to the S-NSSAI Y. As an example, the CN related to the S-NSSAI X may be congested for causes such as a handover of the terminal and the addition of an intermediate-SMF (I-SMF) but may not be limited to a specific embodiment.

As an example, the AMF 1920 may determine on its own that the S-NSSAI X is to be modified to the S-NSSAI Y. As another example, the AMF 1920 may interact with a PCF to make the S-NSSAI X modified to the S-NSSAI Y but is not limited to a specific embodiment.

The AMF 1920 may transmit information for requesting modification of the slice of a PDU session from the S-NSSAI X to the S-NSSAI Y or information for requesting creation of a PDU session using the S-NSSAI Y (e.g., Nsmf_PDUSession_UpdateSMContext Request) to an SMF 1930 that manages the PDU session created by the S-NSSAI X and the DNN A. Based on the information obtained from the AMF 1920, the SMF 1930 may transmit a PDU session modification command message for creating the PDU session using the S-NSSAI Y. As an example, the message may include information instructing creation of the new PDU session using the S-NSSAI Y and the existing DNN A. In addition, the SMF 1930 may also transmit a timer for the PDU session. Herein, the timer may indicate a time until which the ongoing PDU session is maintained, and then the SMF 1930 may initiate a procedure of releasing the PDU session for the S-NSSAI X and the DNN A.

In addition, as an example, the SMF 1930 may transmit a PDU session modification command by using N1N2 message transmission (e.g., Namf_Communication_N1N2MessageTransfer service operation). As another example, the SMF 1930 may transmit the PDU session modification command through a response to an AMF request (e.g., Nsmf_PDUSession_UpdateSMContext response), and in this case, the N1N2 message transmission may not be performed.

Next, based on the PDU session modification command received from the SMF 1930, the terminal 1910 may perceive that a procedure of creating a PDU session using the S-NSSAI Y and the DNN A should be initiated.

The terminal 1910 may initiate the procedure of creating a PDU session using the S-NSSAI Y and the DNN A, and may create a new PDU session. If the PDU session is successfully created, the terminal 1910 may transmit data of applications of a PDU session created using the existing S-NSSAI X and the DNN A through the new created PDU session.

Herein, the above-described operation may be performed based on a URSP rule of a terminal. As an example, in case a specific application specified to use the S-NSSAI X and the DNN A according to the URSP rule cannot use the S-NSSAI X, as described above, the terminal 1910 may determine a PDU session for transmitting application data by using a URSP rule with low priority. Herein, as described above, if the URSP with low priority specifies that the modified S-NSSAI Y and the DNN A are not used but another slice and/or DNN is to be used, the terminal 1910 may not transmit the application to a new PDU session created through the S-NSSAI Y and the DNN A. That is, the terminal 1910 may perform data transmission by using a slice and a DNN present in the URSP rule with low priority and create a new PDU session, if necessary.

Herein, in case all application data using the S-NSSAI X and the DNN A does not need to be transmitted through a PDU session created through the S-NSSAI Y and the DNN A based on a URSP rule, the terminal 1910 may not create a PDU session using the S-NSSAI Y and the DNN A. As an example, the terminal 1910 may indicate such information by including information indicating that no PDU session using the S-NSSAI Y and the DNN A is needed, in a PDU session modification complete message.

In addition, as an example, before a timer for maintaining a PDU session received from the SMF 1930 expires, the terminal 1910 may perform a release procedure for the PDU cession using the S-NSSAI X and the DNN A. As another example, the SMF 1930 may also perform the release procedure for the PDU session after the timer expires, but is not limited to a specific embodiment.

Herein, the AMF 1920 may receive a message indicating completion of PDU session release (e.g., Nsmf_PDUSession_SMContextStatusNotify) from the SMF 1930. As an example, the SMF 1930 may transmit additional information to the AMF 1920 to indicate that a PDU session using the S-NSSAI X is successfully modified to a PDU session using the S-NSSAI Y. Based on the information received from the SMF 1930, the AMF 1920 may transmit the S-NSSAI X to the terminal 1910 by including the S-NSSAI X in a rejected NSSAI. In addition, the AMF 1920 may transmit a backoff timer for the S-NSSAI X to the terminal 1910 together with the above-described information. That is, when the terminal 1910 receives the rejected S-NSSAI through a terminal configuration update procedure, if the terminal obtains a backoff timer with the rejected S-NSSAI, the terminal may initiate the back-off timer and manage the S-NSSAI X as rejected NSSAI until the backoff timer expires. Even if a registration area is modified, the terminal may not include the S-NSSAI X in a requested NSSAI. That is, when the backoff timer expires, the terminal 1910 may mange the S-NSSAI X as rejected NSSAI, unless the AMF 1920 itself indicates the S-NSSAI X to the terminal by including the S-NSSAI X in allowed NSSAI. Accordingly, the terminal 1910 may not include the S-NSSAI X in requested NSSAI. Herein, as an example, the AMF 1920 may perform a terminal configuration update procedure at any time after it is determined that the S-NSSAI X is to be modified to the S-NSSAI Y, but is not limited to a specific form.

As another example, based on above-described FIG. 11 to FIG. 17, in case an AMF determines to modify a slice, a PCF may update a URSP rule based on the determination of the AMF. As an example, if a registration process has no terminal policy association for the terminal, the AMF may create terminal policy association. Specifically, in the related art, when slice modification is needed due to CN congestion, an AMF may not create terminal policy association.

On the other hand, when an AMF determines to modify a slice and there is no terminal policy association, the AMF may create terminal policy association unlike the related art.

Herein, when the AMF creates terminal policy association, the AMF may transmit modified slice information to a PCF. As a specific example, if an S-NSSAI X is changed to an S-NSSAI Y, the AMF may transmit information indicating change from the S-NSSAI X to the S-NSSAI Y to the PCF together with at least one of information on a DNN of a session or information on a congested location (e.g., cell information, TA information, registration area information, service area information of a congested node). In addition, the AMF may also transmit timer information for making the S-NSSAI X unavailable.

The PCF may receive the information from the AMF and update a URSP rule of the terminal. Herein, the PCF may configure a validity condition of the URSP rule based on a timer value and location information received from the AMF. Based on the validity condition, the PCF may update the URSP rule to lower a priority of the S-NSSAI X temporarily at a specific time and in a specific area. Herein, because the PCF uses the timer value, the terminal may move to an area without congestion or may not update the URSP again after congestion is solved, but the present disclosure may not be limited to a specific embodiment.

In addition, as an example, triggering for network slice re-mapping may be performed by a PCF. That is, the PCF itself may determine whether or not to modify an S-NSSAI. As a specific example, the PCF may trigger network slice re-mapping, if the performance of a network slice associated with a PDU session does not satisfy an application requirement of an AF. That is, network slice re-mapping may be performed by the PCF. As an example, in the above-described case, the PCF may configure the validity condition of the URSP rule based on the obtained timer value and location information. Based on the validity condition, the PCF may update the URSP rule to lower a priority of the S-NSSAI X temporarily at a specific time and in a specific area. Herein, because the PCF uses the timer value, the terminal may move to an area without congestion or may not update the URSP again after congestion is solved, but the present disclosure may not be limited to a specific embodiment.

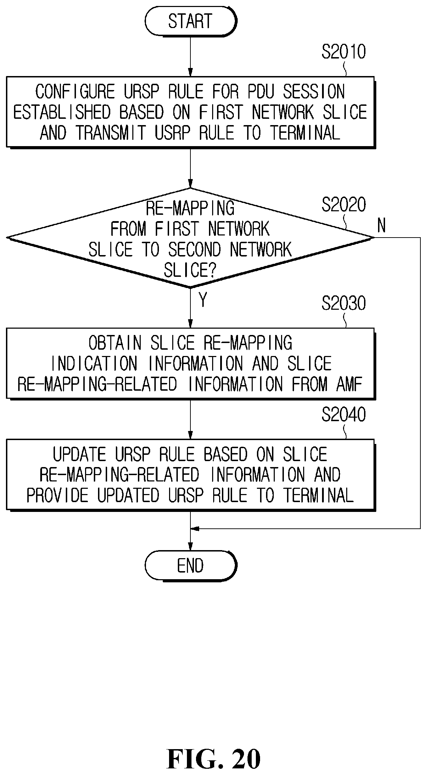

FIG. 20 is a view showing a method for operating a PCF applicable to the present disclosure. Referring to FIG. 20, the PCF may configure a URSP rule for a PDU session established based on a first network slice and transmit the URSP rule to a terminal (S2010). Herein, if a network slice associated with the PDU session based on a first network slice unavailability cause is re-mapped from the first network slice to the second network slice (S2020), the PCF may obtain slice re-mapping indication information and slice re-mapping-related information from an AMF (S2030). Next, the PCF may update the URSP based on the slice re-mapping-related information and provide the updated URSP rule to the terminal (S2040).

As an example, the slice re-mapping indication information may be information indicating that the first network slice is not used but the second network slice is used. In addition, the PCF may obtain at least one of DNN information of the PDU session, congested location information, or first network slice-related timer information from the AMF together with the slice re-mapping indication information and the slice re-mapping-related information. Herein, the PCF may configure a URSP rule condition based on the congested location information and the first network slice-related timer information, update the URSP rule based on information on the URSP rule condition, and provide the updated URSP rule to the terminal.

In addition, the terminal may obtain the first network slice-related timer information and establish a PDU session through the second network slice while a first network slice-related timer is operating. On the other hand, when the first network slice-related timer expires, the terminal may establish a PDU session through the first network slice.

In addition, when the first network slice-related timer expires, the terminal may apply the URSP rule from before the update. That is, the terminal may use the existing URSP rule without a particular procedure.

In addition, as an example, the first network slice-related timer may indicate a time period in which the first network slice is not valid, or a time period in which the second network slice is valid.

As another example, in case the slice re-mapping indication information and the slice re-mapping-related information are obtained from the AMF based on network congestion control, a terminal (UE) policy association may be generated if there is not UE policy association. The PCF may obtain the slice re-mapping indication information and the slice re-mapping-related information based on the generated terminal policy association.

In addition, the AMF may obtain terminal capability information indicating whether or not the terminal supports slice re-mapping. Herein the PCF may obtain the slice re-mapping indication information and the slice re-mapping-related information from the AMF, when re-mapping is performed from the first network slice to the second network slice.

In addition, as an example, in case the AMF performs slice re-mapping, the AMF may transmit an SM context request or SM context update to the SMF and receive a response message based on the SM context request or SM context update. Herein, if a network slice associated with a PDU session is replaced, the SMF may determine that the PDU session and the second network slice are associated with each other. On the other hand, if a network slice associated with a PDU session is added, the SMF may determine that the PDU session is associated with the first network slice and the second network slice.

In addition, as an example, the PCF may confirm that the first network slice of a PDU session does not satisfy an application requirement of an AF, and may re-map the network slice of the PDU session from the first network slice to the second network slice.

In addition, as an example, the first network slice may be associated with a first S-NSSAI, and the second network slice may be associated with a second S-NSSAI.

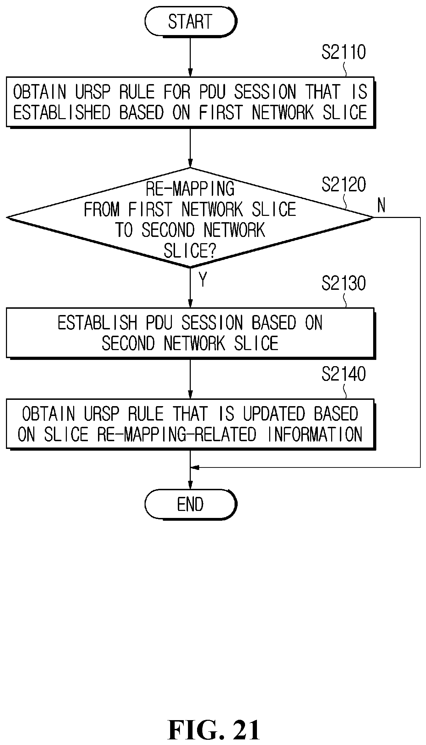

FIG. 21 is a view showing a method for operating a terminal applicable to the present disclosure. Referring to FIG. 21, the terminal may receive a URSP rule for a PDU session that is established based on a first network slice (S2110). Herein, if a network slice associated with the PDU session based on a first network slice unavailability cause is re-mapped from the first network slice to the second network slice (S2120), the terminal may establish a PDU session based on the second network slice (S2130). In addition, the terminal may obtain a URSP rule that is updated based on slice re-mapping-related information (S2140).

As an example, the slice re-mapping indication information may be information indicating that the first network slice is not used but the second network slice is used. In addition, a PCF may obtain at least one of DNN information of the PDU session, congested location information, or first network slice-related timer information from the AMF together with the slice re-mapping indication information and the slice re-mapping-related information. Herein, the PCF may configure a URSP rule condition based on the congested location information and the first network slice-related timer information, update the URSP rule based on information on the URSP rule condition, and provide the updated URSP rule to the terminal.

In addition, the terminal may obtain the first network slice-related timer information and establish a PDU session through the second network slice while a first network slice-related timer is operating. On the other hand, when the first network slice-related timer expires, the terminal may establish a PDU session through the first network slice.

In addition, when the first network slice-related timer expires, the terminal may apply the URSP rule from before the update. That is, the terminal may use the existing URSP rule without a particular procedure.

In addition, as an example, the first network slice-related timer may indicate a time period in which the first network slice is not valid, or a time period in which the second network slice is valid.

As another example, in case the slice re-mapping indication information and the slice re-mapping-related information are obtained from the AMF based on network congestion control, a terminal (UE) policy association may be generated if there is not UE policy association. The PCF may obtain the slice re-mapping indication information and the slice re-mapping-related information based on the generated terminal policy association.

In addition, the AMF may obtain terminal capability information indicating whether or not the terminal supports slice re-mapping. Herein the PCF may obtain the slice re-mapping indication information and the slice re-mapping-related information from the AMF, when re-mapping is performed from the first network slice to the second network slice.

In addition, as an example, in case the AMF performs slice re-mapping, the AMF may transmit an SM context request or SM context update to the SMF and receive a response message based on the SM context request or SM context update. Herein, if a network slice associated with a PDU session is replaced, the SMF may determine that the PDU session and the second network slice are associated with each other. On the other hand, if a network slice associated with a PDU session is added, the SMF may determine that the PDU session is associated with the first network slice and the second network slice.

In addition, as an example, the PCF may confirm that the first network slice of a PDU session does not satisfy an application requirement of an AF, and may re-map the network slice of the PDU session from the first network slice to the second network slice.

In addition, as an example, the first network slice may be associated with a first S-NSSAI, and the second network slice may be associated with a second S-NSSAI.

As the examples of the proposal method described above may also be included in one of the implementation methods of the present disclosure, it is an obvious fact that they may be considered as a type of proposal methods. In addition, the proposal methods described above may be implemented individually or in a combination (or merger) of some of them. A rule may be defined so that information on whether or not to apply the proposal methods (or information on the rules of the proposal methods) is notified from a base station to a terminal through a predefined signal (e.g., a physical layer signal or an upper layer signal).

The present disclosure may be embodied in other specific forms without departing from the technical ideas and essential features described in the present disclosure. Therefore, the above detailed description should not be construed as limiting in all respects and should be considered as an illustrative one. The scope of the present disclosure should be determined by rational interpretation of the appended claims, and all changes within the equivalent scope of the present disclosure are included in the scope of the present disclosure. In addition, claims having no explicit citation relationship in the claims may be combined to form an embodiment or to be included as a new claim by amendment after filing.

### Industrial Applicability

The embodiments of the present disclosure are applicable to various radio access systems. Examples of the various radio access systems include a 3^{rd} generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method for operating a policy control function (PCF) in a wireless communication system, the method comprising:
configuring a UE route selection policy (URSP) rule for a protocol data unit (PDU) session, which is established based on a first network slice and providing the URSP rule to a terminal,
based on a network slice associated with the PDU session being re-mapped from the first network slice to a second network slice based on an unavailability cause for the first network slice, obtaining slice re-mapping indication information and slice re-mapping-related information from an access management function (AMF), and
updating the URSP rule based on the slice re-mapping-related information and providing the updated URSP rule to the terminal.

2. The method of claim 1, wherein the slice re-mapping indication information is information indicating that the first network slice is not used and the second network slice is used.

3. The method of claim 2, wherein the PCF obtains at least one of data network name (DNN) information of the PDU session, information on a location where congestion occurs, or information on a first network slice-related timer, from the AMF, together with the slice re-mapping indication information and the slice re-mapping-related information.

4. The method of claim 3, wherein, based on the information on the location where congestion occurs and the information on the first network slice-related timer, which are obtained from the AMF, the PCF configures a URSP rule condition, updates the URSP rule based on information on the URSP rule condition and provides the updated URSP rule to the terminal.

5. The method of claim 4, wherein the terminal obtains the information on the first network slice-related timer, establishes the PDU session through the second network slice during operation of the first network slice-related timer, and establishes the PDU session through the first network slice based on expiration of the first network slice-related timer.

6. The method of claim 5, wherein the terminal applies the URSP rule from before the update, based on the expiration of the first network slice-related timer.

7. The method of claim 6, wherein the first network slice-related timer indicates a time period in which the first network slice is not valid, or a time period in which the second network slice is valid.

8. The method of claim 1, wherein, based on the slice re-mapping indication information and the slice re-mapping-related information being obtained from the AMF based on network congestion control, a UE policy association is generated based on no UE policy association being present, and the slice re-mapping indication information and the slice re-mapping-related information are obtained based on the generated UE policy association.

9. The method of claim 1, wherein the AMF obtains terminal capability information indicating whether or not the terminal supports network slice re-mapping, and the slice re-mapping indication information and the slice re-mapping-related information are obtained from the AMF, based on re-mapping being performed from the first network slice to the second network slice.

10. The method of claim 1, wherein, based on the AMF performing the network slice re-mapping, the AMF transmits a session management (SM) context request or an SM context update to a session management function (SMF) and receives a response message based on the SM context request or the SM context update,
wherein, based on a network slice associated with a PDU session being replaced, the SMF determines that the PDU session is associated with the second network slice, and
wherein, based on a network slice associated with the PDU session being added, the SMF determines that the PDU session is associated with the first network slice and the second network slice.

11. The method of claim 1, wherein the PCF detects that the first network slice of the PDU session does not satisfy an application requirement of an application function (AF), and
wherein the PCF re-maps a network slice of the PDU session from the first network slice to the second network slice.

12. The method of claim 1, wherein the first network slice is related to first single-network slice selection assistance information (S-NSSAI), and the second network slice is related to second S-NSSAI.

13. A policy control function (PCF) operating in a wireless communication system, the PCF comprising:
at least one transceiver;
at least one processor; and
at least one memory operably coupled with the least one processor and storing instructions that instruct, when executed, the at least one processor to perform a specific operation,
wherein the specific operation comprises:
configuring a UE route selection policy (URSP) rule for a protocol data unit (PDU) session, which is established based on a first network slice and providing the URSP rule to a terminal;
based on a network slice associated with the PDU session being re-mapped from the first network slice to a second network slice based on an unavailability cause for the first network slice, obtaining slice re-mapping indication information and slice re-mapping-related information from an access management function (AMF); and
updating the URSP rule based on the slice re-mapping-related information and providing the updated URSP rule to the terminal.

14. A method for operating a terminal in a wireless communication system, the method comprising:
receiving a UE route selection policy (URSP) rule for a protocol data unit (PDU) session that is established based on a first network slice;
based on a network slice associated with the PDU session being re-mapped from the first network slice to a second network slice based on an unavailability cause for the first network slice, configuring a PDU session based on the second network slice; and
obtaining an updated URSP rule based on slice re-mapping-related information.

15. A terminal operating in a wireless communication system, the terminal comprising:
at least one transceiver;
at least one processor; and
at least one memory operably coupled with the least one processor and storing instructions that instruct, when executed, the at least one processor to perform a specific operation,
wherein the specific operation comprises:
receiving a UE route selection policy (URSP) rule for a protocol data unit (PDU) session that is established based on a first network slice;
based on a network slice associated with the PDU session being re-mapped from the first network slice to a second network slice based on an unavailability cause for the first network slice, configuring a PDU session based on the second network slice; and
obtaining an updated URSP rule based on slice re-mapping-related information.

16. A device comprising at least one memory and at least one processor functionally coupled with the at least one memory,
wherein the at least one processor controls the device to:
configure a UE route selection policy (URSP) rule for a protocol data unit (PDU) session, which is established based on a first network slice and provide the URSP rule to another device,
based on a network slice associated with the PDU session being re-mapped from the first network slice to a second network slice based on an unavailability cause for the first network slice, obtain slice re-mapping indication information and slice re-mapping-related information from an access management function (AMF), and
update the URSP rule based on the slice re-mapping-related information and provide the updated URSP rule to the another device.

17. A non-transitory computer-readable medium storing at least one instruction, the non-transitory computer-readable medium comprising the at least one instruction that is executable by a processor,
wherein the at least one instruction controls a device to:
configure a UE route selection policy (URSP) rule for a protocol data unit (PDU) session, which is established based on a first network slice and provide the URSP rule to another device,
based on a network slice associated with the PDU session being re-mapped from the first network slice to a second network slice based on an unavailability cause for the first network slice, obtain slice re-mapping indication information and slice re-mapping-related information from an access management function (AMF), and
update the URSP rule based on the slice re-mapping-related information and provide the updated URSP rule to the another device.
